# EUROPÄISCHE PATENTSCHRIFT

(11) **EP 3 407 994 B1**
(45) Veröffentlichungstag und Bekanntmachung des Hinweises auf die Patenterteilung: **28.07.2021**
(21) Anmeldenummer: 17703647.2
(22) Anmeldetag: 17.01.2017
(51) Int. Cl.: A63H 3/28, A63H 33/26, A63H 33/00

(54) **KENNUNGSTRÄGER FÜR EIN SPIELZEUG ZUR WIEDERGABE VON MUSIK ODER EINER GESPROCHENEN GESCHICHTE**
IDENTIFICATION CARRIER FOR A TOY FOR REPRODUCING MUSIC OR AN AUDIO STORY
SUPPORT D'IDENTIFICATION POUR UN JOUET DESTINÉ À RESTITUER DE LA MUSIQUE OU UNE HISTOIRE RACONTÉE VOCALEMENT

(30) Priorität: 25.01.2016 DE 102016000631
(43) Veröffentlichungstag der Anmeldung: 05.12.2018
(73) Patentinhaber: Boxine GmbH, 40237 Düsseldorf (DE)
(72) Erfinder: FASSBENDER, Patric, 40476 Düsseldorf (DE); STAHL, Marcus, 40468 Düsseldorf (DE); WILMANNS, Christian, 41564 Kaarst (DE)
(74) Vertreter: Tilmann, Max Wilhelm
(86) Internationale Anmeldenummer: PCT/EP2017/000045
(87) Internationale Veröffentlichungsnummer: WO 2017/129348

(56) Entgegenhaltungen:
- WO-A1-99/60583
- WO-A1-2011/093694
- WO-A1-2014/127288
- WO-A1-2015/104222
- WO-A1-2016/055862
- WO-A1-2017/100821
- WO-A2-2009/031832
- CN-U- 202 569 452
- DE-U1-202012 100 364
- JP-A- 2003 126 539
- US-A- 1 535 035
- US-A- 3 706 158
- US-A1- 2004 214 642
- US-A1- 2014 033 583

## Beschreibung

Die Erfindung betrifft ein System aus einem Kennungsträger und einem Spielzeug zur Wiedergabe von Musik oder einer gesprochenen Geschichte sowie ein Verfahren zur Wiedergabe von Musik oder einer gesprochenen Geschichte unter Einsatz eines solchen Systems.

Aus WO 2015/104222 A1 ist ein Spielzeug zur Wiedergabe von Musik oder einer gesprochenen Geschichte mit einem Lautsprecher oder einem Lautsprecheranschluss, einem Sensor, der innerhalb eines Bereichs seiner Umgebung eine Eigenschaft oder eine Änderung einer Eigenschaft dieser Umgebung feststellen kann, sowie einer Kontrolleinheit, die den Lautsprecher oder den Lautsprecheranschluss zur Wiedergabe von Musik oder einer gesprochenen Geschichte ansteuern kann, wenn der Sensor innerhalb des Bereichs einer Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt, bekannt. Aus WO 2015/104222 A1 ist es ferner bekannt, ein solches Spielzeug mit einem Kennungsträger zu einem System zusammenzufügen, bei dem der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert, die der Sensor im Bereich seiner Umgebung feststellen kann. Als bevorzugtes Ausführungsbeispiel ist es aus WO 2015/104222 A1 bekannt, dass der Kennungsträger einen RFID-Transponder aufweist oder eine Antenne aufweist und eine modulierte Welle abstrahlen und/oder empfangen kann. Ferner ist es aus dieser Schrift bekannt, dass der Sensor ein Lesegerät zum Kommunizieren mit einem passiven RFID-Transponder und/oder zum Kommunizieren mit einem aktiven RFID-Transponder ist.

US 2004/0214642 A1 beschreibt in ihren Figuren 7a und 7c magnetische Spielteile, die auf ein Tablett aufgesetzt werden können. Der jeweilige magnetische Spielblock weist einen RFID-Tag und eine dazugehörige Antenne auf, die sich über die gesamte Breite des magnetischen Spielblocks erstreckt. Die gesamte Standfläche des magnetischen Spielblocks ist magnetisch ausgeführt. Ebenso ist die Oberfläche des Tabletts als magnetische Oberfläche ausgeführt sein. Unterhalb der magnetischen Oberfläche des Tabletts befindet sich eine Antenne des Tabletts.

Vor diesem Hintergrund lag der Erfindung die Aufgabe zugrunde, ein System aus einem Kennungsträger und einem Spielzeug zur Wiedergabe von Musik oder einer gesprochenen Geschichte zu schaffen, bei dem der Kennungsträger von einem Sensor des Spielzeugs gut erkannt werden kann.

Diese Aufgabe wird durch das System gemäß Anspruch 1, das Verfahren gemäß Anspruch 2 und die Verwendung eines Kennungsträgers in einem solchen System oder einem solchen Verfahren gemäß Anspruch 3 gelöst. Bevorzugte Ausführungsformen sind in den Unteransprüchen und der hiernach folgenden Beschreibung näher erläutert.

Die Erfindung geht von dem Grundgedanken aus, den Kennungsträger des Systems mit einer Standfläche und einem Magneten auszubilden, die es erlauben, den Kennungsträger auf eine Fläche zu stellen und bei entsprechender Ausgestaltung der Fläche, bzw. der der Fläche benachbarten Elemente eine den Kennungsträger zusätzlich an der Fläche haltende Wechselwirkung zwischen dem Magneten des Kennungsträgers und der Fläche, bzw. den der Fläche benachbarten Elementen zu erzeugen. Es wurde nun erkannt, dass bei einer derartigen Ausgestaltung eines Kennungsträgers und Verwendung einer Kennung in dem Kennungsträger, die eine Eigenschaft eines externen Magnetfelds ändert, wenn sie in das Magnetfeld gelangt, dann eine reduzierte Erkennungswahrscheinlichkeit der Kennung entsteht, wenn der Magnet näher zur Standfläche angeordnet ist als die Kennung und/oder eine Flächennormale zur Standfläche sowohl durch den Magneten als auch durch die Kennung führt. Wird ein solcher Kennungsträger in einem System mit einem Spielzeug zur Wiedergabe von Musik oder einer gesprochenen Geschichte mit einem Sensor, der innerhalb eines Bereichs seiner Umgebung eine Eigenschaft und eine Änderung einer Eigenschaft eines in dem Bereich seiner Umgebung wirkenden Magnetfelds feststellen kann, eingesetzt, so ist es möglich, dass das Erkennen der Kennung, wenn sie in das Magnetfeld gelangt, durch die Existenz des zusätzlichen Magneten in dem Kennungsträger gestört wird. Es wurde erkannt, dass diese Störung geringer ausfällt oder sogar gänzlich wegfällt, wenn zumindest eine Flächennormale zur Standfläche nur durch den Magneten oder nur durch die Kennung führt.

In einer bevorzugten Ausführungsform sind der Magnet und die Kennung im Wesentlichen gleich weit von der Standfläche beabstandet angeordnet, wobei zumindest eine Flächennormale zur Standfläche nur durch den Magneten oder nur die Kennung führt. Dadurch können der Magnet und die Kennung möglichst nah an die Standfläche platziert werden.

In einer bevorzugten Ausführungsform ist die Kennung näher zur Standfläche angeordnet als der Magnet. Das ermöglicht es, die Kennung näher an einen Sensor heranzuführen, wenn dieser im Bereich einer Stellfläche angeordnet ist, auf die die Kennung mit ihrer Standfläche gestellt wird.

Als Standfläche des Kennungsträgers wird eine Fläche verstanden, auf der der Kennungsträger stehen kann. Insbesondere bevorzugt ist die Standfläche so angeordnet, bzw. sind die gemäß einer bevorzugten Ausführungsform die die Standfläche bildenden, mehreren, nicht ineinander übergehenden Teilflächen derart ausgeführt, dass der Massenschwerpunkt des Kennungsträgers oberhalb der Fläche liegt, die von der die Standfläche, bzw. die Teilflächen umgebenden Einhüllenden (Enveloppe) liegt. Erfindungsgemäß sind die Kennung und der Magnet relativ zur Standfläche derart angeordnet, dass der Magnet näher zur Standfläche angeordnet ist, als die Kennung. Darunter wird insbesondere verstanden, dass der kürzeste Abstand des Magneten zu einem Punkt auf der Standfläche kürzer ist, als der kürzeste Abstand der Kennung zu einem Punkt auf der Standfläche, wobei diese beiden Punkte nicht zwingend die gleichen Punkte sein müssen. In einer bevorzugten Ausführungsform ist der kürzeste Abstand jedes Teils des Magneten zu einem Punkt auf der Standfläche kürzer als der kürzeste Abstand jedes Teils der Kennung zu einem Punkt auf der Standfläche. Die erfindungsgemäßen Vorteile können aber bereits dann erreicht werden, wenn der kürzeste Abstand des Massenschwerpunkts des Magneten zu einem Punkt auf der Standfläche kürzer ist, als der kürzeste Abstand des Massenschwerpunkts der Kennung zu einem Punkt auf der Standfläche. Ebenso können die Vorteile der Erfindung bereits erzielt werden, wenn der kürzeste Abstand des Volumenschwerpunkts des Magneten zu einem Punkt auf der Standfläche kürzer ist als der kürzeste Abstand des Volumenschwerpunkts der Kennung zu einem Punkt auf der Standfläche.

Die Erfindung schreibt vor, dass zumindest eine Flächennormale zur Standfläche nur durch den Magneten oder nur durch die Kennung führt. Es ist erwünscht, dass die Kennung versetzt zum Magneten angeordnet wird und durch den Magneten nicht verdeckt wird. Deshalb führt erfindungsgemäß keine Flächennormale zur Standfläche durch den Magneten und die Kennung. In dieser bevorzugten Ausführungsform gibt es somit nur Flächennormalen zur Standfläche, die entweder gar nicht durch den Magneten und gar nicht durch die Kennung führen oder nur solche, die nur durch einen Teil des Magneten führen, aber nicht durch einen Teil der Kennung führen, oder solche, die nur durch einen Teil der Kennung führen, aber nicht durch einen Teil des Magneten führen. Dabei werden die Vorteile der Erfindung bereits erzielt werden, wenn eine Flächennormale zur Standfläche durch einen Teil des Magneten führt und durch einen Teil der Kennung führt, aber nicht durch den Teil der Kennung führt, die die Eigenschaft eines externen Magnetfelds ändert. In einer bevorzugten Ausführungsform wird als Kennung beispielsweise ein aktiver RFID-Transponder eingesetzt. Ein derartiger Transponder weist regelmäßig einen Mikrochip, eine Antenne und eine Energiequelle auf, die auch durch physikalisch unterscheidbare Komponenten gebildet werden. Die Vorteile der Erfindung können bei einer derartigen Ausführungsform bereits dann erzielt werden, wenn keine Flächennormale zur Standfläche durch einen Teil des Magneten und einen Teil der Antenne des aktiven RFID-Transponders führt. Bei einer solchen Ausgestaltung wäre es unschädlich, wenn die Flächennormale zur Standfläche durch einen Teil des Magneten und einen Teil des Mikrochips oder einen Teil der Energiequelle führt.

Die Vorteile der Erfindung werden ebenfalls dann erreicht, wenn es zumindest eine Flächennormale zur Standfläche gibt, die durch den Teil der Kennung führt, der die Änderung der Eigenschaft eines externen Magnetfelds herbeiführt, wenn dieser Teil in das Magnetfeld gelangt, die aber nicht durch einen Teil des Magneten führt.

Als der Teil der Kennung, der die Eigenschaft eines externen Magnetfelds ändert, wenn dieser Teil in das Magnetfeld gelangt, wird bei der Erfindung, bei der die Kennung nämlich als aktiver oder passiver RFID-Transponder ausgeführt ist, die Antenne eines solchen RFID-Transponders verstanden, beispielsweise eines passiven RFID-Transponders als auch eines aktiven RFID-Transponders.

In einer bevorzugten Ausführungsform liegt die Standfläche, bzw. liegen die in einer bevorzugten Ausführungsform vorgesehenen mehreren, die Standfläche gemeinsam bildenden, nicht ineinander übergehenden Teilflächen in einer Ebene. Dies führt dazu, dass ein derartiger Kennungsträger gut auf einer ebenen Fläche eines Spielzeugs zur Wiedergabe von Musik oder einer gesprochenen Geschichte stehen kann. Es sind aber auch Ausführungsformen denkbar, bei denen die Standfläche nicht in einer Ebene liegt. Derartige Ausführungsformen werden insbesondere dann eingesetzt, wenn der Kennungsträger und das Spielzeug zur Wiedergabe von Musik oder einer gesprochenen Geschichte derart ausgeführt werden sollen, dass der Kennungsträger an einer bestimmten Stelle und in einer bestimmten Ausrichtung an dem Spielzeug zur Wiedergabe von Musik oder einer gesprochenen Geschichte platziert werden soll. Hier kann es zweckmäßig sein, die Standfläche des Kennungsträgers auf eine bestimmte, nicht ebene Oberflächengestaltung des Spielzeugs abzustimmen.

In einer bevorzugten Ausführungsform setzt sich die Standfläche aus mehreren, nicht ineinander übergehenden Teilflächen zusammen.

Der Kennungsträger des erfindungsgemäßen Systems hat eine figürliche Form seines Äußeren. Figuren, wie beispielsweise menschliche Figuren oder Tierfiguren mit Füßen weisen unter den Füßen Flächen auf, die nicht ineinander übergehen, soweit die Figur mit zueinander beabstandeten Füßen ausgebildet ist. Die Standfläche einer solchen Figur setzt sich aus diesen Teilflächen zusammen. Auch ist es denkbar, dass die Figuren weitere Elemente aufweisen die eine Fläche ausbilden, die als Teilfläche zur Standfläche beitragen kann, beispielsweise wenn die Figur in ihren Händen ein Element hält, auf dem sich die Figur zusätzlich abstützt, wie beispielsweise ein Stab oder ein Musikinstrument.

Die die Kennung weist eine Antenne auf. Der Kennungsträger weist einen RFID-Transponder auf. Insbesondere bevorzugt weist der RFID-Transponder eine Spule, vorzugsweise eine Kupferspule, mit einem Ferritkern auf.

In einer bevorzugten Ausführungsform weist der Kennungsträger einen RFID-Transponder auf. Besonders der Einsatz dieser Technologie erlaubt eine Vielfalt von Kommunikationsmöglichkeiten zwischen dem Kennungsträger und dem Spielzeug. Insbesondere erlaubt der Einsatz dieser Technologie das Erkennen einer Vielzahl von Kennungen. Dadurch wird es für das erfindungsgemäße System möglich, aus einer Vielzahl von Audioinformationen die Audioinformation auszuwählen, die wiedergegeben werden soll, beispielsweise wenn jede wiederzugebende Audioinformation ihre eigene Kennung zugeordnet bekommt, beispielsweise in einer in dem erfindungsgemäßen System oder auf einem Server abgelegten Zuordnungstabelle.

In einer bevorzugten Ausführungsform ist der Magnet ein Scheibenmagnet oder ein Stabmagnet. Insbesondere bevorzugt ist der Magnet kein Ringmagnet. Der Magnet des Kennungsträgers bietet insbesondere den Vorteil, dass der Kennungsträger dank des Magneten an einem entsprechend ausgestalteten Spielzeug anhaften kann. Dies erlaubt es auch, dass das Spielzeug mit aufgesetztem Kennungsträger bewegt werden kann, ohne dass der Kennungsträger eine bestimmte Relativposition relativ zum Spielzeug verliert. Der durch das Vorsehen eines Magneten als Teil des Kennungsträgers erreichte Vorteil wird jedoch mit dem Risiko erkauft, dass die Erkennungsgenauigkeit der Kennung sinkt. Es ist deshalb insbesondere bevorzugt, wenn der Magnet ein geringes Volumen einnimmt, was mit einem Scheibenmagneten oder einem Stabmagneten im Vergleich zu einem ringförmigen Magneten erreicht werden kann.

Die das Erkennen der Kennung des Kennungsträgers störenden Einflüsse des Magneten des Kennungsträgers können zusätzlich dadurch reduziert werden, wenn der Kennungsträger näher zur Standfläche als zur Kennung angeordnet wird. Insbesondere bevorzugt ist der Abstand des Kennungsträgers zur Kennung doppelt so groß, insbesondere bevorzugt dreifach so groß, insbesondere bevorzugt vierfach so groß, insbesondere bevorzugt zehnfach so groß, wie der Abstand des Magneten zur Kennung, wobei gemäß einer bevorzugten Ausführungsform insbesondere auf die Abstände der Massenschwerpunkte, bzw. der Volumenschwerpunkte des Magneten und des Teils der Kennung abgestellt werden, der die Änderung der Eigenschaft des externen Magnetfelds herbeiführt, wenn dieser Teil der Kennung in das Magnetfeld gelangt.

In einer bevorzugten Ausführungsform weist der Kennungsträger mehr als einen Magneten auf. Die vorstehend beschriebene Auslegungsregel für die Anordnung des Magneten und der Kennung, bzw. des Teils der Kennung, der die Änderung der Eigenschaft des externen Magnetfelds herbeiführt, wenn dieser Teil in das Magnetfeld gelangt, gelten in einer bevorzugten Ausführungsform für jeden Magneten des Kennungsträgers. Die Vorteile der Erfindung werden bei einem Kennungsträger mit mehreren Magneten aber bereits schon dann erreicht, wenn die vorbeschriebene Auslegungsregel nur bei einem Magneten der mehreren Magneten des Kennungsträgers erfüllt wird. Insbesondere bei Kennungsträgern, die gemäß einer bevorzugten Ausführungsform eine Standfläche aufweisen, die sich aus mehreren, nicht ineinander übergehenden Teilflächen zusammensetzt, kann es von Vorteil sein, mehrere Magneten vorzusehen, nämlich jeweils einen Magneten, der einer Teilfläche zugeordnet wird.

Ergänzend hat der Kennungsträger in einer bevorzugten Ausführungsform eine erste Kennung, wobei die erste Kennung eine Eigenschaft eines externen Magnetfelds ändern kann, wenn sie in das Magnetfeld gelangt, und eine zweiten Kennung, wobei die zweite Kennung eine Eigenschaft eines externen Magnetfelds ändert, wenn sie in das Magnetfeld gelangt, wobei die erste Kennung näher zur Standfläche angeordnet ist als die zweite. Der Einsatz von zwei Kennungen ermöglicht es, das externe Magnetfeld in unterschiedlicher Weise zu beeinflussen. Diese unterschiedliche Art der Beeinflussung kann beispielsweise für ein Bedienkonzept genutzt werden.

In einer bevorzugten Ausführungsform weist der Kennungsträger zwei beabstandet von einander und vorzugsweise mit divergierenden Flächennormalen ausgerichtete Standflächen auf. In einer bevorzugten Ausführungsform ist die eine Kennung näher an der einen Standfläche und die andere Kennung näher an der anderen Kennung angeordnet.

Wird eine solche Kennung in einem System mit einer Stellfläche und einem in der Nähe der Stellfläche angeordneten Sensor verwendet, so kann die eine Kennung näher zu dem Sensor positioniert werden, wenn die Kennung mit der einen Standfläche auf die Stellfläche gestellt wird, während die andere Kennung näher zu dem Sensor positioniert werden kann, wenn die Kennung mit der anderen Standfläche auf die Stellfläche gestellt wird. In einem solchen System kann ein Sensor eingesetzt werden, der innerhalb des Bereichs seiner Umgebung eine bestimmte Eigenschaft oder eine bestimmte Änderung einer Eigenschaft des in dem Bereich seiner Umgebung wirkenden Magnetfelds feststellen kann. In einer solchen Ausführungsform kann ein Bedienkonzept realisiert werden, bei dem eine erste Audioinformation, beispielsweise eine Frage, wiedergegeben wird, wenn die Kennung mit der einen Standfläche auf der Stellfläche steht, während eine andere Audioinformation, beispielsweise eine Antwort, wiedergegeben wird, wenn die Kennung mit der anderen Standfläche auf der Stellfläche steht.

In einer bevorzugten Ausführungsform weist eine solche Ausführungsform mit zwei Kennungen einen Magneten. In einer bevorzugten Ausführungsform weist die Kennung einen einzigen Magneten auf. In einer alternativen Ausführungsform weist die Kennung mindestens zwei Magneten auf, einen Magneten, der näher zur einen Standfläche angeordnet ist, und einen Magneten, der näher zur anderen Standfläche angeordnet ist.

Der Kennungsträger weist eine figürliche Form seines Äußeren, nämlich ist eine Tierfigur, ein Mensch oder eine Fantasiefigur.

Ergänzend hat der Kennungsträger in einer bevorzugten Ausführungsform einen Körper, in dem der Magnet und die Kennung angeordnet ist, wobei der Körper aus mindestens einem ersten Teil und einem zweiten Teil besteht. In einer bevorzugten Ausführungsform können der Magnet und die Kennung in dem gleichen Teil angeordnet sein. Insbesondere bevorzugt ist der Magnet jedoch in dem ersten Teil des Körpers angeordnet und die Kennung in dem zweiten Teil des Körpers angeordnet. Mit einer derartigen Ausführungsform lässt sich insbesondere die vorgenannte Lehre besonders gut umsetzen.

Gemäß einer bevorzugten Ausführungsform weist das eine Teil einen Vorsprung auf, der in einer Ausnehmung des anderen Teils eingreift. In einer bevorzugten Ausführungsform weist sowohl der erste Teil einen Vorsprung auf, der in eine Ausnehmung des zweiten Teils eingreift, als auch der zweite Teil einen Vorsprung aufweist, der in eine Ausnehmung des ersten Teils eingreift.

In einer bevorzugten Ausführungsform ist der erste Teil mit dem zweiten Teil verbunden. Eine derartige Verbindung kann stoffschlüssig, beispielsweise durch den Einsatz eines Klebstoffs erfolgen. Ergänzend oder alternativ kann die Verbindung reibschlüssig erfolgen, insbesondere dadurch, dass ein Vorsprung eines Teils mit einer engen Passung in einer Ausnehmung des anderen Teils eingreift.

Im Rahmen der Beschreibung der Erfindung wird als ein geometrischer Grundkörper ein Körper verstanden, der die Form eines Würfels, eines Quaders, eines schiefen Quaders, einer Pyramide, eines Pyramidenstumpfs, eines Zylinders, eines Hohlzylinders, eines Kegels, eines Kegelstumpfs, einer Kugel, einer Kugelschicht, eines Kugelabschnitts, eines Kugelausschnitts, einer zylindrisch durchbohrten Kugel, einer kegelig durchbohrten Kugel, eines Kegelrings, eines schief abgeschnittenen Zylinders, eines Zylinderhufs, eines Fasses oder eines Ellipsoids hat. In einer bevorzugten Ausführungsform weist der erste Teil des Körpers gesamthaft eine dreidimensionale Form auf, die keinem geometrischen Grundkörper entspricht, auch wenn seine gesamthafte dreidimensionale Form aus geometrischen Grundkörpern zusammengesetzt sein kann oder geometrische Grundkörper enthalten kann. In einer ergänzenden oder alternativen bevorzugten Ausführungsform weist der zweite Teil des Körpers gesamthaft eine dreidimensionale Form auf, die keinem geometrischen Grundkörper entspricht, auch wenn seine gesamthafte dreidimensionale Form aus geometrischen Grundkörpern zusammengesetzt sein kann oder geometrische Grundkörper enthalten kann. In einer besonders bevorzugten Ausführungsform weist einer der Teile einen Vorsprung auf, der eine dreidimensionale Form hat, die einem geometrischen Grundkörper entspricht, oder aber zumindest für einen Abschnitt seiner Erstreckung einem geometrischen Grundkörper entspricht. Beispielsweise kann der Teil des Körpers einen zylinderförmigen, einen kegelförmigen oder einen kegelstumpfförmigen Vorsprung aufweisen. In einer bevorzugten Ausführungsform weist das andere Teil eine Ausnehmung auf, deren dreidimensionale Form zumindest annährend dem geometrischen Inversen des Vorsprungs des einen Teils entspricht, beispielsweise eine zylinderförmige Ausnehmung. Hierbei ist insbesondere zu berücksichtigen, dass eine Spielpassung vorgesehen sein kann, um das Einschieben des Vorsprungs zu erleichtern. Alternativ kann eine Presspassung vorgesehen sein, um einen Reibschluss zwischen Vorsprung und den die Ausnehmung umgebenden Wänden zu erzeugen.

In einer bevorzugten Ausführungsform ist der Magnet in dem ersten Teil des Körpers angeordnet, wobei er gemäß einer bevorzugten Ausführungsform nah am oder im Grund einer Ausnehmung dieses ersten Teils angeordnet ist. In der bevorzugten Ausführungsform weist das zweite Teil einen Vorsprung auf, der bei zusammengesetztem ersten und zweiten Teilen in die Ausnehmung des ersten Teils eingreift. In einer bevorzugten Ausführungsform ist die Erstreckung des Vorsprungs im Verhältnis zur Länge der Vertiefung und Größe des im Grund der Vertiefung befindlichen Magneten derart gewählt, dass der Vorsprung den Magneten klapperfrei nah am oder im Grund der Ausnehmung hält oder gemäß einer bevorzugten Ausführungsform sogar durch ein Übermaß den Magneten in den Grund der Vertiefung drückt.

In einer bevorzugten Ausführungsform ist die Kennung in dem zweiten Teil des Körpers angeordnet, wobei sie gemäß einer bevorzugten Ausführungsform nah am im Grund einer Ausnehmung dieses zweiten Teils angeordnet ist. In der bevorzugten Ausführungsform weist das erste Teil einen Vorsprung auf, der bei zusammengesetztem ersten und zweiten Teilen in die Ausnehmung des zweiten Teils eingreift. In einer bevorzugten Ausführungsform ist die Erstreckung des Vorsprungs im Verhältnis zur Länge der Vertiefung und Größe der im Grund der Vertiefung befindlichen Kennung derart gewählt, dass der Vorsprung die Kennung klapperfrei nah am oder im Grund der Ausnehmung hält oder gemäß einer bevorzugten Ausführungsform sogar durch ein Übermaß die Kennung in den Grund der Vertiefung drückt.

Ergänzend weist der Kennungsträger in einer bevorzugten Ausführungsform einen Körper auf, in dem der Magnet und die Kennung angeordnet sind, wobei der Körper zumindest ein Material aufweist, das zumindest zu 50 % biologisch abbaubar ist. Insbesondere bevorzugt weist der Körper zumindest ein Material auf, das zu 100 % biologisch abbaubar ist. Dabei wird als biologisch abbaubar das Vermögen des Materials zum biologischen Abbau, also zu seiner Zersetzung durch Lebewesen, bzw. durch deren Enzyme verstanden. Es ist denkbar, dass der Körper des Kennungsträgers aus einer Mischung von Materialien hergestellt wird. Gemäß diesem Aspekt der Erfindung ist zumindest eins der Materialien dieser Mischung zumindest zu 50 % biologisch abbaubar. In einer bevorzugten Ausführungsform wird der Körper durch ein Spritzgussverfahren oder ein 3D-Druck-Verfahren hergestellt. Das für das Spitzgießen, bzw. den 3D-Druck verwendete Material kann für sich genommen in einer bevorzugten Ausführungsform zumindest zu 50 % abbaubar, insbesondere bevorzugt zu 100 % biologisch abbaubar sein. Die Vorteile der Erfindung werden jedoch bereits erreicht, wenn das für den Spritzguss, bzw. für den 3D-Druck eingesetzte Material aus einer Mischung von Materialien besteht, von denen zumindest eins zumindest zu 50 %, insbesondere bevorzugt zu 100 % biologisch abbaubar ist.

Ergänzend weist der Kennungsträger in einer bevorzugten Ausführungsform einen Körper auf, in dem der Magnet und die Kennung angeordnet sind, wobei der Körper zumindest ein Material aufweist, das aus einem nachwachsenden Rohstoff hergestellt wurde. Es ist denkbar, dass der Körper des Kennungsträgers aus einer Mischung von Materialien hergestellt wird. Gemäß diesem Aspekt der Erfindung ist zumindest eins der Materialien dieser Mischung aus einem nachwachsenden Rohstoff hergestellt. In einer bevorzugten Ausführungsform wird der Körper durch ein Spritzgussverfahren oder ein 3D-Druck-Verfahren hergestellt. Das für das Spitzgießen, bzw. den 3D-Druck verwendete Material kann für sich genommen in einer bevorzugten Ausführungsform gänzlich aus nachwachsenden Rohstoffen hergestellt sein. Die Vorteile der Erfindung werden jedoch bereits erreicht, wenn das für den Spritzguss, bzw. für den 3D-Druck eingesetzte Material aus einer Mischung von Materialien besteht, von denen zumindest eins aus nachwachsenden Rohstoffen hergestellt ist.

Es sind Ausführungsformen denkbar, bei denen auf den Körper zusätzliche Materialschichten, insbesondere Farbe oder Lacke aufgetragen werden.

In einer bevorzugten Ausführungsform weist der Körper zumindest ein Material auf, wie es in DE 10 2010 052 878 A1 und/oder WO 2012/110237 A1 beschrieben wird.

Das erfindungsgemäße System weist einen erfindungsgemäßen Kennungsträger und ein Spielzeug zur Wiedergabe von Musik oder einer gesprochenen Geschichte mit einem Lautsprecher oder einem Lautsprecheranschluss sowie einen Sensor auf, der innerhalb eines Bereichs seiner Umgebung eine Eigenschaft und eine Änderung seiner Eigenschaft eines in dem Bereich seiner Umgebung wirkenden Magnetfelds feststellen kann. Das System weist ferner eine Kontrolleinheit auf, die den Lautsprecher oder den Lautsprecheranschluss zur Wiedergabe von Musik oder einer gesprochenen Geschichte ansteuern kann, wenn der Sensor innerhalb des Bereichs seiner Umgebung eine bestimmte Eigenschaft oder eine bestimmte Änderung einer Eigenschaft des in den Bereich seiner Umgebung wirkenden Magnetfelds feststellt oder wenn die Kontrolleinheit eine bestimmte Änderung der von dem Sensor festgestellten Eigenschaft feststellt.

Als Teil des Spielzeugs, nachfolgend auch als Vorrichtung bezeichnet, wird ein Sensor verwendet, der innerhalb eines Bereichs seiner Umgebung eine Eigenschaft oder eine Änderung einer Eigenschaft dieser Umgebung feststellen kann, und eine Kontrolleinheit vorgesehen, die die gewünschte Ansteuerung vornehmen kann, wenn der Sensor innerhalb des Bereichs seiner Umgebung eine bestimmte Eigenschaft oder eine bestimmte Änderung einer Eigenschaft dieser Umgebung feststellt. Eine diesen Sensor und diese Kontrolleinheit aufweisende Vorrichtung sowie ein einen solchen Sensor und eine solche Kontrolleinheit einsetzendes Verfahren führen zu einer besonders einfachen Bedienung. Zur Wiedergabe der gewünschten Information kann es erfindungsgemäß ausreichen, der Umgebung eine bestimmte, von dem Sensor feststellbare Eigenschaft zu geben, bzw. eine von dem Sensor feststellbare Änderung der Eigenschaft dieser Umgebung durchzuführen und damit - in einer besonders bevorzugten Ausführungsform der Erfindung - unmittelbar die Wiedergabe der gewünschten Information zu bewirken.

Das durch die Erfindung bereitgestellte, vereinfachte Bedienkonzept wird erfindungsgemäß in einem Spielzeug zur Wiedergabe von Musik oder einer gesprochenen Geschichte umsetzen. Es hat sich jedoch gezeigt, dass das vereinfachte Bedienkonzept auch generell bei einer Vorrichtungen zur Wiedergabe von Audioinformationen und sogar auch bei einer Vorrichtung zur Wiedergabe einer Bild-, Video- oder 3D-Information oder einer Vorrichtung zum Ausführen einer Software Vorteile bietet.

Die erfindungsgemäße Vorrichtung und das erfindungsgemäße Verfahren lassen sich - vergleichbar einem MP3-Spieler der herkömmlichen Art - zur Wiedergabe von Audioinformationen einsetzen, die von auf dem MP3-Spieler gespeicherten Informationen ausgehen. Dadurch wird der Einsatz von CDs vermieden. Zugleich vereinfacht die Erfindung das Bedienkonzept der herkömmlichen MP3-Spieler. Bereits das Einstellen einer bestimmten Eigenschaft, bzw. einer bestimmten Änderung einer Eigenschaft der Umgebung des Sensors kann bei einer bevorzugten Ausführungsform der Erfindung zur sofortigen Wiedergabe der Audioinformation führen. Dadurch entfällt das bei herkömmlichen MP3-Spielern häufig insbesondere für Kinder umständliche Bedienkonzept. Dadurch werden die erfindungsgemäße Vorrichtung und das erfindungsgemäße Verfahren besonders gut geeignet für den Einsatz bei Kinderspielzeugen. Das vereinfachte Bedienkonzept bietet jedoch auch die Möglichkeit, Audioinformationen für Erwachsene besonders einfach wiederzugeben.

Ein Einsatzgebiet der Erfindung ist die Wiedergabe von Audioinformationen, insbesondere von Musikstücken, gesprochenen Texten oder der Kombination von Musikstücken und gesprochenen Texten. Diese Audioinformationen haben insbesondere bevorzugt eine Wiedergabedauer von mindestens 10s, vorzugsweise von mehr als 15s, insbesondere bevorzugt von mehr als 20s und besonders bevorzugt von mehr als 25s. Es ist in einer besonders bevorzugten Ausführungsform sogar vorgesehen, dass die Wiedergabedauer der Audioinformation mindestens 30s und besonders bevorzugt mehr als 1 min dauern kann. Beispielsweise haben Hörspiele, die insbesondere bevorzugt mit der Erfindung wiedergegeben werden sollen, häufig eine Länge von mehr als 5 min, teilweise auch von bis zu 30 min oder sogar mehr. Bei der erfindungsgemäß wiederzugebenden Audioinformation handelt es sich insbesondere nicht um ein Bestätigungssignal. Insbesondere handelt es sich bei der erfindungsgemäß wiederzugebenden Audioinformation nicht um einen Quittungston, der beispielsweise ausgegeben werden kann, wenn ein erstes Objekt relativ zu einem zweiten Objekt richtig ausgerichtet wurde. Ebenso handelt es sich bei der Audioinformation besonders bevorzugt nicht um ein Jingle, das abgespielt wird, wenn ein erstes Objekt in die Nähe eines zweiten Objekts gebracht wird oder in eine vorher festgelegte, bestimmte Position relativ zu dem zweiten Objekt gebracht wird. Die Erfindung befasst sich mit der Audioinformation, deren Wiedergabedauer länger andauert, wie dies bei Musikstücken oder gesprochenen Texten der Fall ist. Die Audioinformation ist insbesondere bevorzugt eine solche, bei deren Wiedergabe eine nicht periodische Reihenfolge von unterschiedlichen Tönen wiedergegeben wird.

Der Lautsprecher der erfindungsgemäßen Vorrichtung ist insbesondere bevorzugt ein Wandler, der elektrisch Signale in mechanische Schwingungen (Schall) umsetzen kann.

Die erfindungsgemäße Vorrichtung kann anstelle eines Lautsprechers auch einen Lautsprecheranschluss aufweisen, beispielsweise einen Speakon-, XLR-Anschluss oder beispielsweise eine 6,35mm-Klinkenbuchse. Indem die Kontrolleinheit den Lautsprecheranschluss ansteuert, kann sie bei an den Lautsprecheranschluss angeschlossenem Lautsprecher auch diesen Lautsprecher ansteuern. Der Lautsprecheranschluss kann auch eine Sendeeinheit sein, die über Funk, beispielsweise über Bluetooth oder über ein WLAN-Funknetzwerk mit einem Lautsprecher kommunizieren kann. Insbesondere bevorzugt kommuniziert die Sendeeinheit jedoch nicht mittels WLAN-Funknetzwerks mit dem Lautsprecher sondern beispielsweise über Bluetooth. Ebenso kann die Vorrichtung als Lautsprecheranschluss oder als Anschluss für die Anzeige zur Wiedergabe einer Bild-, Video- oder 3D-Information einen mit einer Dockingstation eines Smartphones kompatiblen Anschluss aufweisen. Dockingstationen für Smartphones können dazu genutzt werden, aufgrund von Ansteuerbefehlen des Smartphones einen Lautsprecher oder eine Anzeige zur Wiedergabe einer Bild-, Video- oder 3D-Information anzusteuern. Indem die erfindungsgemäße Vorrichtung einen mit einer solchen Dockingstation kompatiblen Anschluss aufweist und anstelle des Smartphones mit der Dockingstation verbunden wird, erhält die Kontrolleinheit der erfindungsgemäße Vorrichtung die Möglichkeit, den mit der Dockingstation verbundenen Lautsprecher oder die mit der Dockingstation verbundene Anzeige zur Wiedergabe einer Bild-, Video- oder 3D-Information anzusteuern. Die Dockingstation kann mittels Kabel mit dem Lautsprecher oder der Anzeige zur Wiedergabe einer Bild-, Video- oder 3D-Information verbunden sein. Die Dockingstation kann aber auch kabellos, beispielsweise über ein Funknetzwerk mit dem Lautsprecher oder der Anzeige zur Wiedergabe einer Bild-, Video- oder 3D-Information verbunden sein. In der nachfolgenden Beschreibung wird - soweit nicht explizit die Besonderheiten der Ansteuerung eines Lautsprecheranschlusses oder eines Anschlusses für eine Anzeige zur Wiedergabe einer Bild-, Video- oder 3D-Information beschrieben werden - die Erfindung stellvertretend für die weiteren Möglichkeiten der Ansteuerung eines Lautsprecheranschlusses oder eines Anschlusses für eine Anzeige zur Wiedergabe einer Bild-, Video- oder 3D-Information anhand des bevorzugten Einsatzgebiets der Ansteuerung eines Lautsprechers beschrieben. Für das Einsatzgebiet der Ansteuerung eines Lautsprecheranschlusses oder eines Anschlusses für eine Anzeige zur Wiedergabe einer Bild-, Video- oder 3D-Information ist, soweit in der nachfolgenden Beschreibung Ansteuern des Lautsprechers oder einer Anzeige zur Wiedergabe einer Bild-, Video- oder 3D-Information beschrieben wird, damit auch das Ansteuern eines Lautsprecheranschlusses oder eines Anschlusses für eine Anzeige zur Wiedergabe einer Bild-, Video- oder 3D-Information gemeint.

In einer bevorzugten Ausführungsform weist die erfindungsgemäße Vorrichtung mindestens zwei Lautsprecher auf, so dass eine Wiedergabe der Audioinformation in Stereo möglich wird.

Bei der erfindungsgemäßen Vorrichtung kann ein Sensor eingesetzt werden, der innerhalb eines Bereichs seiner Umgebung eine Eigenschaft feststellen kann. Ebenso kann ein Sensor eingesetzt werden, der innerhalb eines Bereichs seiner Umgebung eine Änderung einer Eigenschaft dieser Umgebung feststellen kann. Ebenso kann ein Sensor eingesetzt werden, der sowohl innerhalb eines Bereichs seiner Umgebung einer Eigenschaft feststellen kann als auch innerhalb eines Bereichs seiner Umgebung einer Änderung einer Eigenschaft dieser Umgebung feststellen kann.

Die Kennung des erfindungsgemäßen Kennungsträgers ändert die Eigenschaft eines externen Magnetfelds, wenn sie in das Magnetfeld gelangt. In einer bevorzugten Ausführungsform ändert die Kennung die Stärke und/oder die Ausrichtung eines bestehenden externen Magnetfelds, wenn sie in das Magnetfeld gelangt, wobei als externes Magnetfeld sowohl das Erdmagnetfeld, als auch ein Magnetfeld verstanden wird, das sich aus der Überlagerung des Erdmagnetfelds und einem durch das Vorhandensein eines ein Magnetfeld erzeugenden Elements erzeugten Magnetfelds ergibt. Eine durch das Einbringen der Kennung in das Magnetfeld herbeigeführte Änderung der Eigenschaft des Magnetfelds kann auch durch das Einbringen eines die elektromagnetischen Wellen beeinflussenden Elements bewirkt werden. Im Rahmen dieser Erfindung wird die durch das Einbringen eines RFID-Transponders herbeigeführte Änderung der von einem als Sender ausgebildeten Sensors ausgestrahlten elektromagnetischen Welle als Änderung einer Eigenschaft des externen Magnetfelds verstanden.

In einer bevorzugten Ausführungsform kann der Sensor beispielsweise die Stärke eines Magnetfelds in einem bestimmten Bereich seiner Umgebung feststellen, der Sensor kann ein von der Stärke dieses Magnetfelds abhängiges Signal erzeugen, das der Kontrolleinheit zugeführt wird. Erkennt die Kontrolleinheit, dass das Signal einen bestimmten, vorgegebenen Wert erreicht, so erkennt die Kontrolleinheit, dass der Sensor innerhalb des Bereichs seiner Umgebung eine bestimmte Eigenschaft, nämlich eine bestimmte Stärke eines Magnetfelds festgestellt hat. Daraufhin kann die Kontrolleinheit den Lautsprecher zur Wiedergabe einer Audioinformation ansteuern.

In einem ergänzenden oder alternativen Ausführungsbeispiel kann der Sensor die Änderung der Stärke des Magnetfelds innerhalb eines Bereichs seiner Umgebung feststellen und beispielsweise ein Signal erzeugen, das der Kontrolleinheit zugeführt wird, dass von der Geschwindigkeit der Änderung der Magnetfeldstärke oder der Richtung der Magnetfeldstärke (wird das Magnetfeld stärker oder schwächer?) abhängt. Erkennt die Kontrolleinheit, der das Signal zugeführt wird, dass die Änderung einen bestimmten Wert erreicht, so kann die Kontrolleinheit den Lautsprecher zur Wiedergabe der Audioinformation ansteuern.

In einer ergänzenden oder alternativen Ausführungsform kann der Sensor feststellen, dass ein Magnetfeld in einem bestimmten Bereich seiner Umgebung eine bestimmte Feldrichtung relativ zu einer Vorzugsrichtung aufweist. Insbesondere bevorzugt kann der Sensor feststellen, dass das Magnetfeld die Vorzugsrichtung nicht aufweist. Besonders bevorzugt kann der Sensor sogar feststellen, in welchem Winkel die Feldrichtung des Magnetfelds relativ zu einer Vorzugsrichtung steht. In dieser Ausführungsform kann der Sensor der Kontrolleinheit durch ein Signal mitteilen, dass die Feldrichtung des Magnetfelds nicht der Vorzugsrichtung entspricht. Bereits auf Grundlage dieses Signals kann die Kontrolleinheit den Lautsprecher zur Wiedergabe der Audioinformation ansteuern. In einer alternativen Ausführungsform kann der Sensor der Kontrolleinheit über ein Signal sogar mitteilen, in welchem Winkel die Feldrichtung des Magnetfelds zur Vorzugsrichtung steht. Es kann dann festgelegt werden, dass die Kontrolleinheit den Lautsprecher zur Wiedergabe einer Audioinformation ansteuert, wenn die Feldrichtung des Magnetfelds in einem bestimmten Winkel relativ zur Vorzugsrichtung steht.

Ebenfalls sind Ausführungsbeispiele denkbar, bei denen die Kontrolleinheit ein Signal des Sensors auswertet, das abhängig von dem Winkel der Feldrichtung des Magnetfelds relativ zur Vorzugsrichtung ist, und den Lautsprecher zur Wiedergabe der Audioinformation ansteuert, wenn sich die Feldrichtung des Magnetfelds in einer bestimmten Weise relativ zur Vorzugsrichtung ändert, beispielsweise in einer bestimmten Richtung relativ zur Vorzugsrichtung ändert oder beispielsweise in einer bestimmten Geschwindigkeit relativ zur Vorzugsrichtung ändert oder aber auch über einen vorbestimmten Zeitraum ein Änderungsprofil relativ zur Vorzugsrichtung aufweist, wobei als Änderungsprofil insbesondere eine zeitliche Abfolge von unterschiedlichen Winkeln verstanden wird, die die Feldrichtung des Magnetfelds relativ zur Vorzugsrichtung einnimmt.

Als vom Sensor festzustellende Eigenschaft eines Bereichs seiner Umgebung wird erfindungsgemäß auch das Vorhandensein einer vorzugsweise hinsichtlich ihrer Eigenschaften zeitlich invarianten elektromagnetischen Welle im Bereich der Umgebung des Sensors verstanden oder das Vorhandensein einer beispielsweise metallischen Struktur, die eine vorhandene elektromagnetische Welle beeinflusst. Es sind Ausführungsbeispiele denkbar, bei denen der Sensor derart ausgestaltet ist, das er das Vorhandensein einer bestimmten elektromagnetischen Welle feststellen kann, beispielsweise einer elektromagnetischen Welle mit einer bestimmten Geschwindigkeit, bestimmten Intensität, einer bestimmten Wellenimpedanz, einer bestimmten Wellenlänge und/oder einer bestimmten Frequenz erkennen kann. Der Sensor kann auch so ausgestaltet sein, dass er eine Struktur feststellen kann, die eine bestimmte elektromagnetische Welle beeinflussen kann, beispielsweise eine elektromagnetische Welle mit einer bestimmten Geschwindigkeit, bestimmten Intensität, einer bestimmten Wellenimpedanz, einer bestimmten Wellenlänge und/oder einer bestimmten Frequenz. Erkennt der Sensor eine derartige elektromagnetische Welle oder eine solche Struktur, kann er dies der Kontrolleinheit über ein Signal mitteilen. Ergänzend oder alternativ kann der Sensor derart ausgelegt sein, dass er die Geschwindigkeit, die Intensität, die Wellenimpedanz, die Wellenlänge und/oder die Frequenz messen kann und der Kontrolleinheit über ein Signal den jeweiligen Wert der erkannten Größe und/oder die Änderung der jeweils erkannten Größe mitteilen kann. Die vom Sensor erkannte elektromagnetische Welle ist keine elektromagnetische Welle mit einer Wellenlänge, bzw. Frequenz in dem für das menschliche Auge sichtbaren Spektrum und/oder aus dem Infrarot-Spektrum. Die vom Sensor erkannte Beeinflussung durch eine Struktur betrifft keine elektromagnetische Welle mit einer Wellenlänge, bzw. Frequenz in dem für das menschliche Auge sichtbaren Spektrum und/oder aus dem Infrarot-Spektrum. Die vom Sensor erkannte elektromagnetische Welle ist keine elektromagnetische Welle eines WLAN-Funknetzwerks, insbesondere keine Welle eines Funknetzwerks nach einem Standard der IEEE-802.11-Familie. Die vom Sensor erkannte Beeinflussung durch eine Struktur betrifftkeine elektromagnetische Welle eines WLAN-Funknetzwerks, insbesondere keine Welle eines Funknetzwerks nach einem Standard der IEEE-802.11-Familie.

Als vom Sensor festzustellende Änderung einer Eigenschaft eines Bereichs seiner Umgebung wird insbesondere bevorzugt die Änderung einer Eigenschaft einer elektromagnetischen Welle verstanden. Während in dem zuvor stehenden Abschnitt das Vorhandensein einer bestimmten, vorzugsweise hinsichtlich ihrer Eigenschaften zeitlich invarianten elektromagnetischen Welle als vom Sensor festzustellende Eigenschaft des Bereichs seiner Umgebung beschrieben wurde, wird nachfolgend die Möglichkeit beschrieben, dass eine bestehende elektromagnetische Wellen angepasst werden kann und dadurch eine vom Sensor festzustellende Änderung einer Eigenschaft eines Bereichs seiner Umgebung erzeugt wird, auf deren Grundlage die Kontrolleinheit den Lautsprecher zur Wiedergabe der Audioinformation ansteuern kann. Eine elektromagnetische Welle kann beispielsweise von einem Lesegerät zum Kommunizieren mit einem passiven RFID-Transponder erzeugt werden und dadurch geändert werden, dass der passive RFID-Transponder in einen Bereich der Umgebung des Lesegeräts gebracht wird, in dem seine Anwesenheit die elektromagnetische Welle ändert. Die durch das Einbringen des RFID-Transponders herbeigeführte Änderung der elektromagnetischen Welle kann vom Sensor als Änderung einer Eigenschaft eines Bereichs seiner Umgebung erkannt werden. Die Möglichkeit, Änderungen einer elektromagnetischen Welle zu erkennen, ermöglicht es der Erfindung, die für das Ansteuern des Lautsprechers notwendige, bestimmte Änderung einer Eigenschaft des Bereichs der Umgebung des Sensors über ein Funksignale, bzw. eine modulierte Welle herbeizuführen. Die elektromagnetische Welle, deren Änderung erkannt wird, ist keine elektromagnetische Welle eines WLAN-Funknetzwerks, insbesondere keine Welle eines Funknetzwerks nach einem Standard der IEEE-802.11-Familie.

In einer bevorzugten Ausführungsform stellt der Sensor eine Eigenschaft innerhalb eines Bereichs seiner Umgebung bzw. eine Änderung einer Eigenschaft innerhalb eines Bereichs seiner Umgebung ohne direkten elektrischen Kontakt mit einem die Eigenschaft, bzw. die Änderung bewirkenden Bauelement fest. In einer ergänzenden oder alternativen Ausführungsform stellt der Sensor eine Eigenschaft innerhalb eines Bereichs seiner Umgebung bzw. eine Änderung einer Eigenschaft innerhalb eines Bereichs seiner Umgebung ohne direkten mechanischen Kontakt mit einem die Eigenschaft, bzw. die Änderung bewirkenden Bauelement fest. Dies bietet für die erfindungsgemäße Vorrichtung den Vorteil, dass die Wiedergabe der Audioinformation bereits erfolgen kann, wenn der Bediener nur die Eigenschaft in der näheren Umgebung der Vorrichtung in vorbestimmter Weise einstellt, bzw. in vorbestimmter Weise ändert. Damit entfällt die Notwendigkeit, zur Wiedergabe der Audioinformation ein Objekt in einer bestimmten Weise in Kontakt mit der erfindungsgemäßen Vorrichtung zur Wiedergabe der Audioinformation zu bringen, beispielsweise ein Schlüsselelement in eine in der Vorrichtung vorgesehene Aufnahme einzubringen oder beispielsweise einen USB-Memory Stick in aus der Praxis bekannter Weise in eine USB-Aufnahmebuchse einzustecken.

Die erfindungsgemäße Vorrichtung und das erfindungsgemäße Verfahren können von ihrem Bedienkonzept her darauf aufbauen, dass der Sensor eine bestimmte, konkrete Eigenschaft oder eine bestimmte Änderung dieser Eigenschaft feststellt, bzw. darauf aufbauen, dass die Kontrolleinheit aus dem ihr von dem Sensor zugeführten Messsignal erkennt, dass innerhalb des Bereichs der Umgebung des Sensors bestimmte Eigenschaft vorhanden ist, bzw. eine bestimmte Änderung einer Eigenschaft vorhanden ist. Beispielsweise kann die erfindungsgemäße Vorrichtung und das erfindungsgemäße Verfahren darauf aufbauen, dass ein Magnetfeld in dem Bereich der Umgebung des Sensors einen bestimmten absoluten Wert der Magnetfeldstärke aufweist oder die Feldrichtung des Magnetfelds einen bestimmten Winkel zu einer Vorzugsrichtung aufweist. Da in einer bevorzugten Ausführungsform die erfindungsgemäße Vorrichtung und das erfindungsgemäße Verfahren jedoch dazu eingesetzt werden sollen, eine Vielzahl unterschiedlicher Audioinformationen wiederzugeben und die Wahl der wiederzugebenden Audioinformation von dem Vorhandensein einer jeweils konkreten Eigenschaft, bzw. einer jeweils konkreten Änderung der Eigenschaft im Bereich der Umgebung des Sensors abhängen soll, besteht bei dieser Ausführungsform die Beschränkung, dass nur eine begrenzte Anzahl von Audioinformationen wiedergegeben werden können. Ist die erfindungsgemäße Vorrichtung beispielsweise so ausgeführt, dass ein erstes Musikstück wiedergegeben wird, wenn die Stärke des Magnetfelds im Bereich der Umgebung des Sensors einen ersten Wert einnimmt, und ein zweites Musikstück wiedergegeben wird, wenn das Magnetfeld im Bereich der Umgebung des Sensors eine zweite Stärke aufweist, so hängt die Anzahl der von der Vorrichtung wiedergebbaren Audioinformationen davon ab, welchen maximalen und welchen minimalen Feldstärkenwert der Sensor feststellen kann und wie fein die Inkremente sind, die der Sensor feststellen kann. Als Eigenschaft der Umgebung, bzw. als Änderung der Eigenschaft der Umgebung wird deshalb insbesondere auch eine modulierte Welle, insbesondere eine elektromagnetische Welle, insbesondere eine elektromagnetische Welle im Radiofrequenzbereich verstanden, aber keine elektromagnetische Welle eines WLAN-Funknetzwerks, insbesondere keine Welle eines Funknetzwerks nach einem Standard der IEEE-802.11-Familie. Dadurch besteht für die erfindungsgemäße Vorrichtung die Möglichkeit, das Vorhandensein eines passiven RFID-Transponders in einem bestimmten Bereich der Umgebung des Sensors festzustellen und die Wiedergabe der Audioinformation beispielsweise dann vorzunehmen, wenn überhaupt ein RFID-Transponder im Bereich der Umgebung des Sensors vorhanden ist, bzw. eine Wiedergabe der Audioinformation dann vorzunehmen, wenn ein bestimmter RFID-Transponder im Bereich der Umgebung des Sensors festgestellt wird. Ebenso ist es in einer bevorzugten Ausführungsform vorgesehen, dass die von dem Sensor festzustellende Eigenschaft im Bereich seiner Umgebung, bzw. die von dem Sensor festzustellende Änderung der Eigenschaft des Bereichs seiner Umgebung durch einen aktiven RFID-Transponder herbeigeführt wird. Ebenso ist es denkbar, dass als Eigenschaft das Vorhandensein einer elektromagnetischen Welle nach dem Near Field Communication-Standard (NFC) festgestellt wird. Ebenso ist es denkbar, dass die festzustellende Änderung der Eigenschaft des Bereichs der Umgebung des Sensors durch eine elektromagnetische Welle nach dem NFC-Standard bereitgestellt wird und vom Sensor festgestellt wird. In einer bevorzugten Ausführungsform ist der Sensor jedoch so ausgebildet, dass er das Vorhandensein einer elektromagnetischen Welle nach dem Bluetooth-Standard nicht feststellen kann und/oder dass er die Änderung einer elektromagnetischen Welle nach dem Bluetooth-Standard nicht feststellen kann.

Insbesondere bevorzugt wird über die elektromagnetische Welle eine Kennung übermittelt, mit der die Kontrolleinheit einen in einem Speicher der erfindungsgemäßen Vorrichtung oder auf einem Server abgelegten Datensatz identifizieren kann und auf Grundlage des Datensatzes den Lautsprecher zur Wiedergabe der Audioinformation ansteuern kann. Insbesondere bevorzugt übermittelt die elektromagnetische Welle keine Daten, die in einem von der Kontrolleinheit in ein gängiges und zur Ansteuerung des Lautsprechers geeignetes Audioformat, beispielweise mpeg3 oder wav umgewandelt werden können. In der bevorzugten Ausführungsform ist es Ziel, dass die elektromagnetische Welle einen Datensatz identifizierbar macht, beispielsweise durch Übertragen einer Kennung, aber den Datensatz nicht selbst überträgt. In einer alternativen Ausführungsform überträgt die elektromagnetische Welle die gesamten Daten der Audioinformation. Dadurch kann die Vorrichtung eine Audioinformation abspielen, die nicht vor der entsprechenden Feststellung durch den Sensor in der Vorrichtung gespeichert war. Alternativ überträgt die elektromagnetische Welle einen Teil der Daten, beispielsweise die Daten, die für die Wiedergabe der ersten Sekunden oder Minuten der Audioinformation benötigt werden, während die Daten, die für die Wiedergabe der weiteren Audioinformation benötigt werden, in einem Speicher der erfindungsgemäßen Vorrichtung oder auf einem Server abgelegt sind und über eine Kennung identifiziert werden können. In einer bevorzugten Ausführungsform dieser alternativen Ausführungsform überträgt die elektromagnetische Welle jedoch nur den Teil der Daten, die für die Wiedergabe der ersten Minute, insbesondere bevorzugt der ersten 30s, besonders bevorzugt der ersten 10s der Audioinformation benötigt werden, während die Daten, die für die Wiedergabe der weiteren Audioinformation benötigt werden, in einem Speicher der erfindungsgemäßen Vorrichtung oder auf einem Server abgelegt sind und über eine Kennung identifiziert werden können.

In einer bevorzugten Ausführungsform ist der Sensor somit ein Lesegerät zum Kommunizieren mit einem passiven RFID-Transponder und/oder zum Kommunizieren mit einem aktiven RFID-Transponder. In einer alternativen Ausführungsform weist der Sensor eine Antenne auf, die eine modulierte Welle abstrahlen und/oder empfangen kann, insbesondere eine Welle nach dem NFC-Standard.

Die Vorrichtung kann eine Auflage (Stellfläche), auf der ein Gegenstand dauerhaft platziert werden kann, aufweisen, wobei der Sensor zumindest in einem Bereich oberhalb der Auflage eine Eigenschaft oder eine Änderung einer Eigenschaft dieses Bereichs feststellen kann, und/oder einer Befestigung, an der ein Gegenstand dauerhaft befestigt werden kann, wobei der Sensor zumindest in einem Bereich benachbart der Befestigung eine Eigenschaft oder eine Änderung einer Eigenschaft dieses Bereichs feststellen kann. So kann ein Gegenstand, beispielsweise der erfindungsgemäße Kennungsträger, so platziert werden, dass er sich im Feststellungsbereich des Sensors, in dem der Sensor eine Eigenschaft oder eine Änderung einer Eigenschaft dieses Bereichs feststellen kann, befindet. Das hat den Vorteil, dass der Gegenstand im Feststellungsbereich verbleiben kann, ohne dass der Gegenstand oder die Vorrichtung durch einen Benutzer dauerhaft festgehalten werden müssen. Die Befestigung kann beispielsweise durch einen Hänge-, Klick-, Magnet-, Drehmechanismus oder auf andere Weise ausgeführt sein.

Die Kontrolleinheit der erfindungsgemäßen Vorrichtung kann den Lautsprecher zur Wiedergabe der Audioinformation ansteuern, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. In einer bevorzugten Ausführungsform erzeugt der Sensor ein Signal mit einem von der Kontrolleinheit feststellbaren Wert, wenn der Sensor innerhalb des Bereichs seiner Umgebung eine bestimmte Eigenschaft oder eine bestimmte Änderung einer Eigenschaft feststellt. Es ist beispielsweise auch denkbar, dass der Sensor nur dann ein Signal erzeugt, das der Kontrolleinheit zugeführt wird, wenn der Sensor innerhalb des Bereichs seiner Umgebung eine bestimmte Eigenschaft oder eine bestimmte Änderung einer Eigenschaft dieser Umgebung feststellt. Solche Ausführungsformen führen dazu, dass der Sensor bereits die Auswertung vornimmt und entweder nur dann ein Signal der Kontrolleinheit zuführt, wenn er eine bestimmte Eigenschaft oder eine bestimmte Änderung einer Eigenschaft der Umgebung feststellt, oder aber der Kontrolleinheit ein dauerhaftes Signal mit einem bestimmten Wert zuführt, das auf einen bestimmten anderen, von der Kontrolleinheit feststellbaren, Wert geändert wird, wenn der Sensor innerhalb des Bereichs seiner Umgebung eine bestimmte Eigenschaft oder eine bestimmte Änderung einer Eigenschaft dieser Umgebung feststellt. Ergänzend oder alternativ ist es denkbar, dass die Kontrolleinheit die Auswertung vornimmt. Bei einer solchen Ausführungsform führt der Sensor der Kontrolleinheit dauerhaft ein Messsignal zu. Die Kontrolleinheit ist dazu ausgeführt, beispielsweise durch Hinterlegung einer Wertetabelle, aus dem ihr von dem Sensor zugeführten Messsignal zu erkennen, ob innerhalb des Bereichs der Umgebung des Sensors eine bestimmte Eigenschaft oder eine bestimmte Änderung einer Eigenschaft vorliegt. Dabei wird als Änderung der Eigenschaft der Umgebung des Sensors nicht nur das einmalige Auftreten einer bestimmten Änderung verstanden, beispielsweise das einmalige Auftreten einer Änderung der Feldrichtung des Magnetfelds in der Umgebung des Sensors in eine bestimmte Richtung, sondern auch eine zeitliche Abfolge von Eigenschaften im Bereich der Umgebung des Sensors, bzw. eine bestimmte Abfolge von Änderungen der Eigenschaften der Umgebung des Sensors, beispielsweise wie dies beim Auslesen von modulierten Wellen oder beim Auswerten von elektromagnetischen Wellen der Fall ist.

In einer bevorzugten Ausführungsform steuert die Kontrolleinheit den Lautsprecher zur Wiedergabe der Audioinformation nur dann an, wenn der Sensor innerhalb des Bereichs seiner Umgebung eine bestimmte Änderung einer Eigenschaft dieser Umgebung in Form einer bestimmten Abfolge von Änderungen der Eigenschaften feststellt, bzw. wenn die Kontrolleinheit eine bestimmte Änderung der von dem Sensor festgestellten Eigenschaft in Form einer bestimmten Abfolge von Änderungen der Eigenschaften feststellt. Diese Abfolge von Änderungen kann nach Art einer Zeichenkette (eines String) gestaltet sein. Diese Zeichenkette (dieser String) kann beispielsweise an eine bestimmten Platz die Information über die wiederzugebende Audioinformation enthalten und an einem anderen bestimmten Platz ein Kennungswort, das als Kopierschutz oder zur Authentifizierung fungieren kann. Enthält die Abfolge von Änderungen nach Art der Zeichenkette zwar die Information über die wiederzugebende Audioinformation aber nicht das Kennungswort, steuert die Kontrolleinheit den Lautsprecher nicht an. Alternativ zum Kennungswort kann die Zeichenkette auch ein von der Kontrollvorrichtung zur Verifikation ausführbare Befehlsfolge eines Programms (einer Software) sein.

In einer Ausführungsform kann die Kontrolleinheit zusätzlich zu der Ansteuerung des Lautsprechers zur Wiedergabe der Audioinformation auch die Art der Wiedergabe der Audioinformation ändern, beispielsweise die Lautstärke der Wiedergabe wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt. So kann die Kontrolleinheit den Lautsprecher in Abhängigkeit von diesem Winkel ansteuern, in dem sich ein Kennungsträger relativ zum Sensor befindet. Beispielsweise kann durch eine Veränderung des Winkels die Wiedergabe-Lautstärke angepasst werden.

In einer bevorzugten Ausführungsform weist die Vorrichtung einen Speicher auf, in dem Daten hinterlegt sind, aufgrund derer die Kontrolleinheit den Lautsprecher zur Wiedergabe der Audioinformation ansteuern kann. Die Daten beinhalten insbesondere bevorzugt die Audioinformation in dem bestimmten Datenformat, beispielsweise einem MP3-Format oder einem WAV-Format. Es sind Ausführungsformen denkbar, bei denen der Speicher nur Daten einer einzigen Audioinformation aufweist. Die erfindungsgemäße Vorrichtung kann bei einer solchen Ausführungsform dazu eingesetzt werden, bei entsprechendem Einstellen der Eigenschaft des Bereichs der Umgebung des Sensors, bzw. bei entsprechendem Einstellen der Änderung der Eigenschaft des Bereichs der Umgebung des Sensors eine einzige Audioinformation wiederzugeben, deren Wiedergabedauer insbesondere bevorzugt mindestens 10s dauert. In einer bevorzugten Ausführungsform sind in dem Speicher Daten verschiedener Audioinformationen abgelegt. Insbesondere bevorzugt ist bei einer solchen Ausführungsform die Kontrolleinheit derart ausgestaltet, dass sie, wenn der Sensor innerhalb des Bereichs seiner Umgebung eine bestimmte erste Eigenschaft oder eine bestimmte erste Änderung einer Eigenschaft dieser Umgebung feststellt oder die Kontrolleinheit eine bestimmte erste Änderung der von dem Sensor festgestellten Eigenschaft feststellt, den Lautsprecher zur Wiedergabe einer ersten Audioinformation, deren Wiedergabe insbesondere bevorzugt mindestens 10s dauert, ansteuert, während die Kontrolleinheit den Lautsprecher zur Wiedergabe einer zweiten Audioinformation, deren Wiedergabe insbesondere bevorzugt mindestens 10s dauert, ansteuert, wenn der Sensor innerhalb des Bereichs seiner Umgebung eine bestimmte zweite Eigenschaft oder eine bestimmte zweite Änderung einer Eigenschaft dieser Umgebung feststellt oder die Kontrolleinheit eine bestimmte zweite Änderung der von dem Sensor festgestellten Eigenschaft feststellt. Dadurch wird es möglich durch die bestimmte Beeinflussung der Eigenschaft des Bereichs der Umgebung des Sensors oder durch eine bestimmte Beeinflussung der Änderung der Eigenschaft dieser Umgebung des Sensors festzulegen, welche Audioinformation einer Mehrzahl von Audioinformationen die Vorrichtung wiedergibt. Beispielsweise kann die Vorrichtung eine bestimmte erste Audioinformation wiedergeben, wenn das Vorhandensein eines ersten RFID-Transponders in den Bereich der Umgebung des Sensors festgestellt wird, während die Vorrichtung eine zweite Audioinformation wiedergeben kann, wenn das Vorhandensein eines zweiten RFID-Transponders in den Bereich der Umgebung des Sensors festgestellt wird.

In einer bevorzugten Ausführungsform sind die Daten einer Audioinformation als Datensatz mit getrennt auslesbaren Datenfolgen abgelegt, um beispielsweise ein Hörbuch in Form von einzelnen Kapiteln wiederzugeben, bzw. die einzelnen Kapitel eines Hörbuchs ansteuerbar zu machen. Jede Datenfolge eines Datensatzes kann in einer bevorzugten Ausführungsform separat ausgelesen und zur Ansteuerung des Lautsprechers verwendet werden.

In einer bevorzugten Ausführungsform weist die Vorrichtung eine Einheit zum Empfangen von Daten aus dem Internet und/oder zum Senden von Daten ins Internet auf, insbesondere bevorzugt eine Antenne für ein Wireless Local Area Network (WLAN), eine mobile Datenfunktechnologie wie beispielsweise LTE, UMTS oder deren Vorgänger oder Nachfolger oder eine Anschlussbuchse für den Anschluss eines Kabels eines lokalen Netzwerks, das auch einen Internetzugang aufweist, beispielsweise eine Anschlussbuchse für ein Ethernet-Kabel. Durch das Vorhandensein einer Einheit zum Empfangen von Daten aus dem Internet besteht die Möglichkeit, dass die Kontrolleinheit die Daten, die die wiederzugebende Audioinformation in einem bestimmten Datenformat enthalten, aus dem Internet herunterlädt. Auf diese Weise kann die Vorrichtung eine Audioinformation abspielen, die nicht in der Vorrichtung gespeichert war, bevor der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. Dabei kann die Kontrolleinheit derart ausgebildet sein, dass sie die Daten aus dem Internet empfängt und in einem Speicher dauerhaft ablegt und das Ansteuern des Lautsprechers zur Wiedergabe der Audioinformation auf Grundlage der in dem Speicher abgelegten Daten erfolgt. Ergänzend oder alternativ ist es denkbar, dass die Kontrolleinheit die aus dem Internet empfangenen Daten unmittelbar dazu verwendet, um den Lautsprecher zur Wiedergabe einer Audioinformation anzusteuern (sog. Streaming), wobei diese Ausführungsform auch das temporäre Zwischenspeichern der aus dem Internet empfangenen Daten in einem Zwischenspeicher umfassen kann.

Bei Ausführungsformen, die die Daten, die die Audioinformationen in einem bestimmten Datenformat enthalten, aus dem Internet empfangen, ist es beispielsweise denkbar, dass die Kontrolleinheit in einem Speicher eine bestimmte Serveradresse eines mit dem Internet verbundenen Servers vorhält und in einem Speicher eine Tabelle vorhält, in der eine jeweils bestimmte Eigenschaft oder eine jeweils bestimmte Änderung einer Eigenschaft einer jeweiligen Identifikationsnummer zugeordnet wird. Die Kontrolleinheit ist in einer solchen Ausführungsform dann dazu ausgebildet, um beim Erkennen der bestimmten Eigenschaft, bzw. der bestimmten Änderung der Eigenschaft mit dem konkreten Server zu kommunizieren und unter Rückgriff auf die der bestimmten Eigenschaft, bzw. der bestimmten Änderung der Eigenschaft zugeordneten Identifikationsnummer von dem Server einen bestimmten Datensatz herunterzuladen und für das Ansteuern des Lautsprechers zur Wiedergabe der sich aus diesen Daten ergebenden Audioinformation zu verwenden. Beispielsweise können auf dem Server Musiktitel als Daten in einem bestimmten Datenformat abgespeichert werden, wobei der jeweilige Musiktitel, bzw. die diesen Musiktitel enthaltenen Daten auf dem Server unter einem bestimmten Identifikationscode hinterlegt sind. In einer bevorzugten Ausführungsform enthält die erfindungsgemäße Vorrichtung bereits eine Zuordnungstabelle, die bestimmte Eigenschaften, bzw. Änderungen der Eigenschaften des Bereichs der Umgebung des Sensors einigen, einer Mehrzahl oder in einer bevorzugten Ausführungsform sogar allen Identifikationsnummern zuordnet, die auch auf der Datenbank des Servers verwendet werden. Damit wird die Kontrolleinheit in die Lage versetzt, gezielt Datensätze von dem Server herunterzuladen. Alternativ ist es denkbar, dass die Kontrolleinheit dazu ausgebildet ist, eine die festgestellte bestimmte Eigenschaft, bzw. eine die festgestellte bestimmte Änderung der Eigenschaft enthaltende Information an einen bestimmten Server zu übermitteln, der mit dem Internet verbunden ist. Die Zuordnung der erkannten bestimmten Eigenschaft, bzw. der erkannten bestimmten Änderung der Eigenschaft zu einer bestimmten Audioinformation kann dann auf dem Server erfolgen. Die Kontrolleinheit ist dann dazu ausgebildet, von dem Server Daten zu empfangen, die die wiederzugebende Audioinformation enthalten. Der Server übermittelt die Daten an die erfindungsgemäße Vorrichtung, die er der ihm von der Kontrolleinheit übermittelten bestimmten Eigenschaft, bzw. der ihm von der Kontrolleinheit übermittelten bestimmten Änderung der Eigenschaft zugeordnet hat. Diese Ausführungsform vermeidet die Notwendigkeit des Vorhaltens einer Zuordnungstabelle in der erfindungsgemäßen Vorrichtung und erhöht damit die Flexibilität des Empfangs bestimmter, die Audioinformation enthaltender Daten auf Grundlage einer bestimmten, festgestellten Eigenschaft, bzw. einer bestimmten festgestellten Änderung einer Eigenschaft des Bereichs der Umgebung des Sensors. Eine solche Ausführungsform erlaubt es beispielsweise, die Anzahl der auf dem Server bereitgestellten Datensätze zu erhöhen, ohne dass eine Zuordnungstabelle in der Kontrolleinheit der erfindungsgemäßen Vorrichtung angepasst werden müsste. Ebenso sind auf diese Weise Sicherheitskonzepte leicht implementierbar, mit denen beispielsweise verhindert werden können, dass bestimmte Datensätze übertragen werden, beispielsweise weil für diese keine Berechtigung besteht.

In einer bevorzugten Ausführungsform ist die Kontrolleinheit dazu ausgebildet, den Lautsprecher zur Wiedergabe der Audioinformation unmittelbar anzusteuern. Insbesondere bevorzugt müssen der Kontrolleinheit zum Ansteuern des Lautsprechers zur Wiedergabe der Audioinformation keine weiteren Startsignale zugeführt werden. Es ist hierbei allerdings denkbar, dass die Kontrolleinheit die Ansteuerung des Lautsprechers zur Wiedergabe der Audioinformation durch ein Verzögerungsglied verzögert.

In einer bevorzugten Ausführungsform weist die erfindungsgemäße Vorrichtung kein Bedienelement auf, mit dem ein Bediener das Ansteuern des Lautsprechers zur Wiedergabe der Audioinformation durch die Kontrolleinheit beeinflussen könnte, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. Bei dieser Ausführungsform ist es denkbar, dass Bedienelemente vorgesehen sind, um der Kontrolleinheit andere Befehle, als die für das erstmalige Ansteuern des Lautsprechers zur Wiedergabe der Audioinformation zukommen zu lassen, beispielsweise Bedienelemente zum Einstellen der Lautstärke der Wiedergabe der Audioinformation über den Lautsprecher.

Ebenso ist es denkbar, dass Bedienelemente vorgesehen sind, um bei der Wiedergabe einer Audioinformation, die aufgrund von Daten eines Datensatzes mit getrennt auslesbaren Datenfolge wird, von einem ersten Kapitel zu einem nächsten Kapitel zu springen. Auch ist es bei dieser Ausführungsform denkbar, dass ein Bedienelement vorgesehen ist, mit dem ein Bediener nach dem erstmaligen Ansteuern des Lautsprechers zur Wiedergabe der Audioinformation durch die Kontrolleinheit die Wiedergabe unterbrechen kann. In einer bevorzugten Ausführungsform ist deshalb zwar ein Bedienelement vorgesehen. Die Kontrolleinheit kann in dieser Ausführungsform jedoch den Lautsprecher zur Wiedergabe der Audioinformation allein dadurch ansteuern, dass der Sensor innerhalb des Bereichs seiner Umgebung eine bestimmte Eigenschaft oder eine bestimmte Änderung einer Eigenschaft dieser Umgebung feststellt und ohne dass ein Bediener das Bedienelement bedient.

In einer alternativen Ausführungsform weist die Vorrichtung ein Bedienelement auf und ist die Kontrolleinheit derart ausgelegt, dass die Kontrolleinheit den Lautsprecher zur Wiedergabe der Audioinformation erst dann ansteuert, wenn die Kontrolleinheit ein vorbestimmtes Signal von diesem Bedienelement erhält. Beispielsweise kann dieses Bedienelement den Startbefehl zur Ansteuerung des Lautsprechers zur Wiedergabe der Audioinformation geben. In einer besonders bevorzugten Ausführungsform ist dieser Startbefehl jedoch der einzige Startbefehl, der zum Start der Ansteuerung des Lautsprechers zur Wiedergabe der Audioinformation notwendig ist. Insbesondere bevorzugt ist es bei dieser Ausführungsform nicht vorgesehen, dass mit diesem oder einem weiteren Bedienelement weitere Befehlssignale erzeugt werden, die der Kontrolleinheit zugeführt werden müssen, bevor diese den Lautsprecher zur Wiedergabe der Audioinformation ansteuert. Insbesondere bevorzugt sind keine Bedienelemente vorgesehen, mit denen aus einer Mehrzahl von in einem Speicher der Vorrichtung hinterlegten Daten für Audioinformationen ein Datensatz zur Wiedergabe ausgewählt wird. Insbesondere bevorzugt wird bei dieser Ausführungsform der wiederzugebende Datensatz allein auf Grundlage der durch den Sensor festgestellten bestimmten Eigenschaft, bzw. der durch den Sensor festgestellten bestimmten Änderung der Eigenschaft des Bereichs der Umgebung des Sensors, bzw. auf Grundlage der von der Kontrolleinheit festgestellten bestimmten Änderung der von dem Sensor festgestellten Eigenschaft ausgewählt. Eine solche Ausführungsform vereinfacht die Bedienung insbesondere im Vergleich zu aus dem Stand der Technik bekannten MP3-Spieler, bei denen zur Wiedergabe einer bestimmten Audioinformation die Audioinformation zunächst aus einer Liste ausgewählt werden muss.

In einer bevorzugten Ausführungsform kann die Kontrolleinheit derart ausgebildet sein, dass sie die Ansteuerung des Lautsprechers zur Wiedergabe der Audioinformation unterbricht, sobald der Sensor innerhalb des Bereichs seiner Umgebung die bestimmte Eigenschaft oder die bestimmte Änderung der Eigenschaft nicht mehr feststellt, bzw. die Kontrolleinheit die bestimmte Änderung der von dem Sensor festgestellten Eigenschaft nicht mehr feststellt. Die Unterbrechung kann insbesondere bevorzugt sofort, zeitverzögert oder durch eine graduelle Reduktion der Lautstärke bewirkt werden. Dadurch kann beispielsweise bewirkt werden, dass wenn ein in einer bevorzugten Ausführungsform verwendeter RFID-Transponder aus dem Bereich der Umgebung des Sensors entfernt wird, die Wiedergabe der Audioinformation unterbrochen wird. Alternativ ist es denkbar, die Kontrolleinheit derart auszugestalten, dass die Wiedergabe der Audioinformation fortgeführt wird, selbst wenn der Sensor innerhalb des Bereichs seiner Umgebung die bestimmte Eigenschaft oder die bestimmte Änderung der Eigenschaft nicht mehr feststellt, bzw. die Kontrolleinheit die bestimmte Änderung der von dem Sensor festgestellten Eigenschaft nicht mehr feststellt.

In einer bevorzugten Ausführungsform weist die Vorrichtung eine Antenne für ein Wireless Local Area Network (WLAN) auf, die ausgeschaltet werden kann. Insbesondere wenn die erfindungsgemäße Vorrichtung zur Wiedergabe der Audioinformation von Kindern verwendet werden soll, kann ein Interesse daran bestehen, die im Umfeld des Kindes erzeugten elektromagnetischen Wellen zu reduzieren. Hierfür kann es zweckmäßig sein, die WLAN-Antenne auszuschalten.

In einer bevorzugten Ausführungsform ist die erfindungsgemäße Vorrichtung würfelförmig ausgebildet. Die erfindungsgemäße Vorrichtung kann auch andere Formen aufweisen, beispielsweise kugelförmig oder kann beispielsweise die Form von bei Kindern besonders bevorzugten, größeren Objekten einnehmen, wie beispielsweise die Form eines Schiffs, einer Lokomotive, eines Hauses oder eines Tiers, wie beispielsweise eines Elefanten.

In einer bevorzugten Ausführungsform weist die Vorrichtung eine Aufnahme für einen Kennungsträger auf, die optisch, haptisch und/oder durch eine Absetzung in der Oberfläche, beispielsweise eine Mulde oder Erhöhung, kenntlich gemacht ist. In einer bevorzugten Ausführungsform sieht die Vorrichtung vor, den Kennungsträger mechanisch oder magnetisch lösbar zu fixieren. Wie nachstehend im Zusammenhang mit dem erfindungsgemäßen System näher beschrieben, wird die erfindungsgemäße Vorrichtung insbesondere bevorzugt als Teil eines Systems eingesetzt, bei dem die Vorrichtung mit einem Kennungsträger zusammenwirkt, bei der der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert und der Sensor diese Änderung feststellen kann. Wird die erfindungsgemäße Vorrichtung mit einer kenntlich gemachten Aufnahme ausgebildet, so besteht die Möglichkeit, den Kennungsträger in dieser Aufnahme zu positionieren. Durch das Vorsehen einer Aufnahme kann ferner ein Bereich abgegrenzt werden, innerhalb dessen der Sensor ausgelegt ist, um in diesem Bereich seiner Umgebung eine bestimmte Eigenschaft oder eine bestimmte Änderung einer Eigenschaft festzustellen. Das Vorsehen einer Aufnahme ermöglicht es, die erfindungsgemäße Vorrichtung in einer bevorzugten Ausführungsform so auszulegen, dass der Sensor die Eigenschaft seiner Umgebung nur in dem Bereich der Aufnahme feststellen kann, bzw. die Änderung einer Eigenschaft dieser Umgebung nur in dem Bereich der Aufnahme feststellen kann. Damit kann eine unerwünschte Fehlbedienung ausgeschlossen werden. Bei dem nachstehend näher beschriebenen erfindungsgemäßen System kann der Sensors sogar so ausgelegt werden, dass die Kontrolleinheit den Lautsprecher zur Wiedergabe einer Audioinformation nur dann ansteuert, wenn der Kennungsträger in der Aufnahme positioniert wird.

In einer bevorzugten Ausführungsform weist die Vorrichtung ein Bedienelement in Form einer Wippe auf, mit dem die Lautstärke der Wiedergabe der Audioinformation beeinflusst werden kann, indem die Wippe in einer ersten Stellung ein erstes Signal an die Kontrolleinheit sendet, beispielsweise ein Signal zum Erhöhen der Lautstärke der Wiedergabe der Audioinformation, und die Wippe in einer zweiten Stellung ein zweites Signal an die Kontrolleinheit sendet, beispielsweise ein Signal zur Reduktion der Lautstärke der Wiedergabe der Audioinformation. Ferner kann eine solche Wippe eine neutrale Mittelstellung aufweisen, in der kein die Lautstärke beeinflussendes Signal an die Kontrolleinheit gesendet wird. Alternativ ist es denkbar, dass die Vorrichtung ein erstes Bedienelement aufweist, mit dem Signale zum Erhöhen der Lautstärke der Wiedergabe der Audioinformation an die Kontrolleinheit übermittelt werden können, und die Vorrichtung ein zweites Bedienelement aufweist, mit dem Signale zur Reduktion der Lautstärke der Wiedergabe der Audioinformation an die Kontrolleinheit gesendet werden können. In einer besonders bevorzugten Ausführungsform ist das die Erhöhung der Lautstärke beeinflussende Bedienelement größer ausgebildet, als das die Reduktion der Lautstärke der Wiedergabe der Audioinformation beeinflussende Bedienelement. In einer besonders bevorzugten Ausführungsform weisen die beiden Bedienelemente die Form von Ohren auf, die an einem Gehäuse eines Grundkörpers der Vorrichtung angebracht sind, beispielsweise von dem Gehäuse abstehen. Die ohrenförmigen Bedienelemente können das von ihnen zu erzeugende Signal zur Beeinflussung der Lautstärke der Wiedergabe der Audioinformation bei Durchführen einer Druckbewegung oder Knickbewegung abgeben. Das hat den Vorteil, dass der Benutzer die Funktion der Bedienelemente erkennen kann, ohne auf Sprachkenntnisse angewiesen zu sein.

In einer bevorzugten Ausführungsform weist die erfindungsgemäße Vorrichtung ein Display auf. Dieses Display kann insbesondere eine E-Ink-Anzeige sein. Das Display kann auch ein berührungsempfindliches Display sein. Ergänzend oder alternativ kann die Vorrichtung eine LED oder eine Sequenz von LEDs aufweisen.

In einer bevorzugten Ausführungsform weist die Vorrichtung einen Näherungssensor, einen Bewegungssensor (Beschleunigungssensor), einen Sensor für Umgebungslicht, einen Feuchtigkeitssensor, einen Neigungssensor, einen GPS-Sensor und/oder einen gyroskopischen Sensor auf. Derartige Sensoren erlauben es, weitere Bedienbefehle für die Kontrolleinheit zu erzeugen. Beispielsweise kann eine derart ausgebildete Vorrichtung ein Schütteln erkennen und daraus ein Bediensignal für die Kontrolleinheit erzeugen. Beispielsweise kann ein Schütteln der Vorrichtung dazu eingesetzt werden, Daten verschiedener Audioinformationen in zufälliger Reihenfolge wiederzugeben. Ebenso kann eine derart ausgebildete Vorrichtung erkennen, ob von links oder von rechts ein leichter Schlag auf die Vorrichtung ausgeübt wird. Dies kann beispielsweise dazu eingesetzt werden, innerhalb eines Datensatzes zu dem nächsten Kapitel oder zu einem vorherigen Kapitel zu springen. Ebenso kann eine derart ausgestaltete Vorrichtung erkennen, ob sie geworfen wird. Auch hieraus können Bediensignale erzeugt werden.

In einer bevorzugten Ausführungsform weist die Vorrichtung einen Sensor auf, der ein von dem Abstand zwischen einem in dem Bereich der Aufnahme platzierten Objekt und der Aufnahme abhängiges Signal erzeugen kann, beispielsweise einen UltraschallSensor. Dadurch wird es möglich, in einer bevorzugten Ausführungsform der Vorrichtung die Ansteuerung des Lautsprechers von diesem Signal abhängig zu machen, beispielsweise davon, dass das Objekt die Aufnahme berührt oder fast berührt. Des Weiteren wird dadurch in einer ergänzenden oder alternativen Ausführungsform ermöglicht, auf eine Veränderung des Abstands hin weitere Bedienbefehlen zu erzeugen. Beispielsweise kann ein kurzes Entfernen und wieder Abstellen des Objekts dazu eingesetzt werden, innerhalb eines Datensatzes zu dem nächsten Kapitel zu springen.

Eine derart ausgerichtete Vorrichtung kann erkennen, ob sie vertikal gekippt wird oder ob sie horizontal gekippt wird. Auch diese Signale können zum Erzeugen von Bediensignalen für die Kontrolleinheit eingesetzt werden. Beispielsweise kann ein vertikales Kippen zu einem Navigieren innerhalb einer Wiedergabeliste eingesetzt werden, während ein horizontales Kippen einen Wechsel zwischen Applikationen ermöglicht.

In einer bevorzugten Ausführungsform weist die erfindungsgemäße Vorrichtung einen Datenanschluss, beispielsweise einen USB-Anschluss auf. Über einen solchen Anschluss kann beispielsweise ein in einer bevorzugten Ausführungsform als Teil der Vorrichtung vorgesehener Speicher mit Audioinformationen enthaltenden Daten belegt werden. Ebenso ist es möglich, die erfindungsgemäße Vorrichtung über einen solchen Anschluss mit einem Computer zu verbinden, beispielsweise um die Software der Vorrichtung zu konfigurieren.

In einer bevorzugten Ausführungsform ist die Vorrichtung mit Schaumstoff oder einem anderen elastischen Material ummantelt. Insbesondere bevorzugt ist die erfindungsgemäße Vorrichtung vollständig mit Schaumstoff oder einem anderen elastischen Material ummantelt, bzw. bei einer Ausführungsform mit einem Display nur in dem Bereich des Displays nicht mit Schaumstoff oder einem elastischen Material ummantelt. Die Ummantelung schützt zum einen die weiteren Bauelemente der Vorrichtung. Zum anderen schützt die Ummantelung Kinder vor Verletzungen.

In einer bevorzugten Ausführungsform weist die erfindungsgemäße Vorrichtung einen Energiespeicher, insbesondere eine Batterie, insbesondere bevorzugt eine wiederaufladbare Batterie auf. In einer bevorzugten Ausführungsform ist die erfindungsgemäße Vorrichtung derart ausgebildet, dass die Batterie drahtlos aufgeladen werden kann, beispielsweise mittels induktiver Energieübertragung. Dies bietet den Vorteil, dass die Ladestation kindgerecht ausgebildet werden kann, beispielsweise in Form einer Ladeschale, in die die erfindungsgemäße Vorrichtung zum Aufladen allein gelegt werden muss. Dadurch wird vermieden, dass Kinder elektrische Kabel handhaben müssen, um die Batterie der erfindungsgemäßen Vorrichtung aufzuladen.

In einer bevorzugten Ausführungsform kann die erfindungsgemäße Vorrichtung Licht erzeugen, beispielsweise um als Nachtlicht zu funktionieren.

In einer bevorzugten Ausführungsform weist die erfindungsgemäße Vorrichtung ein Gehäuse auf, in dem der Sensor so angeordnet ist, wobei der Bereich der Umgebung des Sensors, in dem der Sensor eine Eigenschaft oder eine Änderung einer Eigenschaft dieser Umgebung feststellen kann, sich nicht weiter als 1m, insbesondere bevorzugt nicht weiter als 150mm, insbesondere bevorzugt nicht weiter als 100 mm, insbesondere bevorzugt nicht weiter als 50 mm, insbesondere bevorzugt nicht weiter als 10 mm, insbesondere bevorzugt nicht weiter als 5 mm über eine Oberfläche des Gehäuses hinaus erstreckt. Dies bietet den Vorteil, dass die Eigenschaft, bzw. die Änderung der Eigenschaft, die der Sensor feststellen soll, damit die Kontrolleinheit den Lautsprecher zur Wiedergabe der Audioinformation ansteuert, nur in einem engen Bereich um das Gehäuse der Vorrichtung erkannt wird. Dies vermeidet Fehlbedienungen.

In einer bevorzugten Ausführungsform ist die Vorrichtung aus nicht oder schwer brennbarem Material hergestellt.

In einer bevorzugten Ausführungsform weist die Vorrichtung ein Mikrofon oder eine Anschlussmöglichkeit für eingehende Audiosignale, beispielsweise von einem Mikrofon auf. Dies ermöglicht es, die Vorrichtung mit Sprache zu steuern oder Aufnahmen zu machen.

Insbesondere bevorzugt kann die Vorrichtung über eine WLAN-Antenne in ein Wireless Local Area Network eingebunden sein und über die WLAN-Antenne Steuerbefehle empfangen, beispielsweise über ein Smartphone oder einen PC gesteuert werden. Diese Steuerbefehle sind in einer bevorzugten Ausführungsform keine Steuerbefehle, mit der Benutzer den Beginn der Wiedergabe der Audioinformation beeinflussen kann. Ebenso kann die erfindungsgemäße Vorrichtung dazu ausgebildet sein, über eine Fernbedienung bedient zu werden.

In einer bevorzugten Ausführungsform weist die erfindungsgemäße Vorrichtung eine Kamera auf. Wird die erfindungsgemäße Vorrichtung beispielsweise als Nachtlicht ausgebildet, so kann die Kamera eine Überwachungsfunktion für das neben der Vorrichtung liegende Kind übernehmen, indem die Kamera beispielsweise von einem Smartphone aus angesteuert werden kann und das von der Kamera aufgenommene Bild auf einem Display wie einem Fernseher, einem Smartphone oder anderem mobilen Display wiedergegeben werden kann. Ergänzend oder alternativ kann die von einem Mikrofon aufgenommene bzw. die durch eine Anschlussmöglichkeit eingespeiste Audioinformation auf diesem Wege auf einen Lautsprecher oder Smartphone wiedergegeben werden.

Ebenso ist es möglich, dass eine über eine WLAN-Antenne in ein Wireless Local Area Network eingebundene Vorrichtung die wiederzugebende Audioinformation an andere Teilnehmer des Netzwerks übergibt, beispielsweise an einen Fernseher oder einen anderen Lautsprecher streamt.

In einer bevorzugten Ausführungsform ist das Betriebssystem der Kontrolleinheit Firefox OS. In einer bevorzugten Ausführungsform kann das Betriebssystem der Kontrolleinheit durch Updates aktualisiert werden.

In einer bevorzugten Ausführungsform ist die Kontrolleinheit dazu ausgebildet, Informationen über die Ansteuerung des Lautsprechers zu ermitteln und zu dokumentieren, beispielsweise die Häufigkeit, mit der bestimmte Audioinformationen abgespielt wurden oder die Reihenfolge, mit der bestimmte Audioinformationen abgespielt wurden. Insbesondere bevorzugt ist die Vorrichtung dazu ausgebildet, derartige Informationen an einen Server zu kommunizieren.

In einer bevorzugten Ausführungsform weist die Vorrichtung Mittel auf, um einen nachstehend beschriebenen Kennungsträger mit Strom zu versorgen, bevorzugt ohne elektrischen Kontakt, beispielsweise per Induktion.

Das erfindungsgemäße System weist eine erfindungsgemäße Vorrichtung und einen Kennungsträger auf, wobei der Kennungsträger eine Eigenschaft hat, die der Sensor feststellen kann, wenn sich der Kennungsträger innerhalb des Bereichs der Umgebung des Sensors befindet, oder der Kennungsträger eine Eigenschaft der Umgebung des Sensors ändert. Grundgedanke des erfindungsgemäßen Systems ist es, dass die Kontrolleinheit den Lautsprecher zur Wiedergabe einer Audioinformation dann ansteuert, wenn ein bestimmter Kennungsträger in den Bereich der Umgebung des Sensors gebracht wird, in dem der Sensor eine Eigenschaft, bzw. eine Änderung einer Eigenschaft feststellen kann. Dabei soll in einer besonders bevorzugten Ausführungsform aber bereits das Verbringen des Kennungsträgers in diesen Bereich das Ansteuern des Lautsprechers zur Wiedergabe der Audioinformation auslösen, ohne dass weitere Bedienbefehle erzeugt werden müssen.

Dieses Grundkonzept des erfindungsgemäßen Systems vereinfacht die Bedienung von Vorrichtungen zur Wiedergabe von Audioinformationen erheblich. Es ist nun nicht mehr notwendig, zerkratzbare CDs zu handhaben, wie das bei den aus der Praxis bekannten CD-Spielern notwendig ist, oder die bei den aus der Praxis bekannten MP3-Spielern zur Ansteuerung der Lautsprecher zur Wiedergabe einer Audioinformation notwendigen, komplexen Bediensequenzen von Bedienelementen zu erlernen. In der einfachsten Ausführungsform der Erfindung reicht es aus, den Kennungsträger in den Bereich der Umgebung des Sensors zu verbringen, in dem der die Eigenschaft oder eine Änderung der Eigenschaft feststellen kann, und damit automatisch die Ansteuerung des Lautsprechers zur Wiedergabe der Audioinformation durch die Kontrolleinheit auszulösen.

Der Kennungsträger hat die Form einer Figur, insbesondere die Form einer menschlichen Figur oder einer Tierfigur oder einer Phantasiefigur. Insbesondere bevorzugt weist der Kennungsträger die Form einer Figur mit Füßen auf. Insbesondere bevorzugt ist bei einem Kennungsträger mit der Form einer Figur mit Füßen der Magnet in den Füßen der Figur angeordnet, so dass die Figur auf der erfindungsgemäßen Vorrichtung stehen kann.

In einer bevorzugten Ausführungsform ist der Kennungsträger nach Art einer Figur ausgebildet, weist aber keinen Sockel auf, auf dem die Figur steht.

In einer bevorzugten Ausführungsform ist der Kennungsträger nicht mechanisch mit der Vorrichtung fixierbar. Insbesondere bevorzugt weisen die Vorrichtung und der Kennungsträger kein System aus Stecker und Buchse auf, mit der der Kennungsträger mit der Vorrichtung verbunden werden könnte.

In einer bevorzugten Ausführungsform ist der Kennungsträger so ausgestaltet, dass der Bediener ihn aufgrund seiner Form, Farbgebung, Oberflächenstruktur und/oder seinem Material mit einer bestimmten Audioinformation assoziieren kann, und dass beim Verbringen in den Bereich der Umgebung des Sensors, in dem dieser eine Eigenschaft oder eine Änderung einer Eigenschaft dieser Umgebung feststellen kann, das Ansteuern des Lautsprechers zur Wiedergabe einer Audioinformation ausgelöst wird, die inhaltlich im Zusammenhang mit der Assoziation des Benutzers steht. Er kann beispielsweise nach Art einer Figur ausgebildet sein und die Wiedergabe einer Audioinformation auslösen, die in Verbindung mit der Form der Figur steht. Beispielsweise kann die Figur die Form von Benjamin Blümchen® haben und die wiedergegebene Audioinformation eine Hörgeschichte mit Benjamin Blümchen als Protagonisten sein. Ebenso ist es denkbar, dass der Kennungsträger individuell angepasst werden kann. Beispielsweise kann der Kennungsträger als Figur ausgebildet sein, die der Form einer Person des näheren Umfelds einer anderen Person ähnelt und die wiedergegebene Audioinformation eine von dieser Person vorher aufgenommene Audioinformation sein. Ebenso ist es denkbar, dass der Kennungsträger die Form einer Figur hat, die einem Wissenschaftler ähnelt, und die Audioinformation Inhalte des von dem Wissenschaftler Herausgefundenen haben. Weiter ist denkbar, dass die Figur einem Komponisten oder Interpreten ähnelt, und die Audioinformation Inhalte von diesem Komponisten oder Interpreten enthält. Es ist denkbar, dass ein Kennungsträger die Audioinformationen zu einem Musikstück, einer Sammlung von Musikstücken (Album) oder einer Playlist auslöst.

In einer bevorzugten Ausführungsform ist der Kennungsträger so ausgebildet, dass die auf ihm gespeicherten Daten verändert werden können. In einer anderen bevorzugten Ausführungsform ist der Kennungsträger so ausgebildet, dass die auf ihm gespeicherten Daten nicht verändert werden können. In einer weiteren bevorzugten Ausführungsform ist der Kennungsträger so ausgebildet, dass die auf ihm gespeicherten Daten nur einmal verändert werden können, danach nicht mehr. In einer bevorzugten Ausführungsform ist ein zunächst veränderbarer Kennungsträger so ausgestaltet, dass er durch eine bestimmte Bearbeitung zu einem unveränderbaren Kennungsträger werden kann, bevorzugt so, dass er nicht wieder zu einem veränderbaren Kennungsträger zurückverwandelt werden kann. Die Bearbeitung kann bevorzugt mechanischer Art sein, etwa Durchtrennung oder Verbindung bestimmter elektrischer Leitungen. In ergänzenden oder alternativen Ausführungsformen kann die Bearbeitung durch sichtbares Licht, durch unsichtbare elektromagnetische Wellen (wie beispielsweise Funksignale, ultraviolettes Licht) durch einen magnetischen, elektrischen und/oder durch einen thermischen Impuls erfolgen. In einer bevorzugten Ausführungsform ist der Kennungsträger so ausgebildet, dass er sich mit einem Klick-Mechanismus in oder an anderen Gegenständen, wie beispielsweise einer Figur, befestigen lässt. Nach diesem Vorgang kann der Gegenstand insgesamt als Kennungsträger angesehen werden. In einer besonders bevorzugten Ausführungsform ist der Kennungsträger so ausgestaltet, dass er durch eine mechanische Bearbeitung unveränderbar gemacht werden kann, die mit der Bewegung zur Betätigung des Klick-Mechanismus' zur Verbindung des Kennungsträgers mit einem Gegenstand kombiniert werden kann, beispielsweise so, dass die Bearbeitung gleichzeitig mit dem Einklicken in den Gegenstand erfolgen kann.

In einer bevorzugten Ausführungsform ist der Kennungsträger so ausgebildet, dass er per Induktion mit Strom zum Betrieb von aktiven elektronischen Bauteilen versorgt werden kann. In einer bevorzugten Ausführungsform ist der Kennungsträger so ausgebildet, dass er aktive elektronische Bauteile enthält, die einen Datenspeicher zur Verfügung stellen. Dieser Datenspeicher ist bevorzugt nicht-flüchtig. In einer bevorzugten Ausführungsform ist der Datenspeicher so ausgebildet, dass er eine Kennung und/oder Audioinformationen zur Verfügung stellen kann, die Grundlage für die Veränderung von Eigenschaften der Umgebung sein können. Indem auf dem Kennungsträger gespeicherte Audioinformationen an die Vorrichtung übertragen werden, kann die Vorrichtung eine Audioinformation abspielen, die nicht in der Vorrichtung gespeichert war, bevor der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt. In einer bevorzugten Ausführungsform weist der Kennungsträger aktive elektronische Bauteile auf, die zur Veränderung von Eigenschaften der Umgebung geeignet sind, die von einem Sensor und einer Kontrolleinheit wieder in Daten umgesetzt werden können. In einer bevorzugten Ausführungsform weist der Kennungsträger einen Prozessor auf. In einer bevorzugten Ausführungsform weist der Kennungsträger auch eine Datenempfangseinheit auf.

Ein Kennungsträger kann auch unabhängig von dem Zweck, Audioinformationen wiederzugeben, von Vorteil sein. Für Speicherung und Übertragung von Daten allgemein kann eine Ausführungsform so ausgestaltet sein, dass sie
- eine Antenne für elektromagnetische Wellen,
- ein aktives elektrisches Bauteil, das einen nicht-flüchtigen Datenspeicher mit Speicherplatz von mindestens 1 Megabyte enthält,
- eine Sendeeinheit, die so ausgebildet ist, dass sie Daten aus dem nicht-flüchtigen Datenspeicher über die Antenne aussenden kann,
- eine Energieempfangseinheit, die Energie empfangen und in ausreichend Strom umwandeln kann, um den Datenspeicher und die Sendeeinheit mit Strom zu versorgen, so dass für den Datensendevorgang kein dauerhafter Energiespeicher benötigt wird, wobei die Energieempfangseinheit von der Antenne verschieden ist,
- eine Steuerungseinheit, die zum Auslesen von Daten aus dem Datenspeicher und zum Aussenden der Daten über die Sendeeinheit bereit ist
aufweist. Insbesondere bevorzugt zeigt die Steuerungseinheit die Bereitschaft zum Auslesen von Daten kontaktlos an, sobald die Energieempfangseinheit dafür ausreichend Energie zur Verfügung stellt, und überträgt auf kontaktlose Anforderung hin Daten aus dem Datenspeicher ganz oder teilweise über die Sendeeinheit. Die vorstehend und nachstehend beschriebenen Aspekte einzelner Ausführungsformen eines Kennungsträgers lassen sich auch auf einen solchen allgemeinverwendbaren Kennungsträger anwenden, wobei an die Ansteuerung eines Lautsprechers jeweils die Verarbeitung oder Anzeige der auf dem Kennungsträger gespeicherten Daten tritt. In einer bevorzugten Ausführungsform hat der Datenspeicher einen Speicherplatz von mindestens 500 Megabyte, 1 Gigabyte oder 4 Gigabyte.

In einer bevorzugten Ausführungsform ist der Kennungsträger derart ausgebildet, dass er innerhalb eines Bereichs der Umgebung des Sensors nur eine bestimmte Eigenschaft oder nur eine bestimmte Änderung einer Eigenschaft dieser Umgebung erzeugen kann und somit nur bewirken kann, dass die Kontrolleinheit den Lautsprecher zur Wiedergabe einer bestimmten Audioinformation ansteuert. In einer derartigen Ausführungsform des Systems ist es vorgesehen, dass zusätzliche Kennungsträger beschafft bzw. vorgehalten werden müssen, um zusätzliche Audioinformationen abzuspielen. Damit löst sich die Erfindung in dieser Ausführungsform von dem bei MP3-Spielern des Standes der Technik häufig wiederzufindenden Prinzip, möglichst viele Funktionen, bzw. möglichst viele Audioinformationen derart in einem Gerät zu vereinen, dass sie jeweils über bestimmte Bedienfolgen aber ohne Hinzunahme weiterer Vorrichtungen abrufbar sind. Im Verhältnis zu derartigen MP3-Spielern ist das erfindungsgemäße System in der hier beschriebenen Ausführungsform aufwendiger ausgestaltet, da eine Vielzahl von Kennungsträgern vorgehalten werden muss, um unterschiedliche Audioinformationen abzuspielen. Es hat sich jedoch gezeigt, dass ein Bedarf für ein einfaches Bedienkonzept besteht, bei dem die Zahl der vorzuhaltenden Kennungsträger zu Gunsten des einfachen Abspielens der einen dem Kennungsträger zugeordneten Audioinformation erhöht wird. Beispielsweise erlaubt es diese Ausführungsform ein Spielzeug-System aufzubauen, bei der figurenartig ausgebildete Kennungsträger zwar jeweils nur dazu geeignet sind, ein bestimmtes, ihnen zugeordnetes Musikstück oder eine bestimmte, ihnen zugeordnete gesprochene Geschichte zu identifizieren, die durch Ansteuerung des Lautsprechers des Spielzeugs abgespielt wird, die Kinder aber durch Wahl der Figur und aufgrund des vereinfachten Bedienkonzepts, das in bevorzugter Ausführungsform das sofortige Abspielen des Musikstücks, bzw. der gesprochenen Geschichte erlaubt, sobald der Kennungsträger innerhalb eines Bereichs der Umgebung des Sensors die entsprechende eine Eigenschaft oder die entsprechende eine Änderung einer Eigenschaft dieser Umgebung erzeugt hat, selbst wählen können, welches Musikstück, bzw. welche gesprochene Geschichte wiedergegeben werden soll. Die durch die Erzeugung der einen entsprechenden Eigenschaft oder der einen entsprechenden Änderung einer Eigenschaft dieser Umgebung kann zur Wiedergabe der Audioinformation einen Datensatz mit getrennt auslesbaren Datenfolgen identifizieren, um beispielsweise durch den einen Kennungsträger ein Hörbuch in Form von einzelnen Kapiteln zu identifizieren und die einzelnen Kapitel eines Hörbuchs ansteuerbar zu machen, bzw. die einzelnen Folgen einer Fortsetzungsgeschichte oder einer Serie zu identifizieren.

Insbesondere bevorzugt hat der Kennungsträger kein Bedienelement, mit dem die Art beeinflusst werden kann, mit der der Kennungsträger innerhalb eines Bereichs der Umgebung des Sensors eine Eigenschaft oder nur eine Änderung einer Eigenschaft dieser Umgebung erzeugen kann. Diese Ausführungsform eignet sich besonders gut für Anwendungsfälle, in denen der Kennungsträger derart ausgebildet ist, dass er innerhalb eines Bereichs der Umgebung des Sensors nur eine bestimmte Eigenschaft oder nur eine bestimmte Änderung einer Eigenschaft dieser Umgebung erzeugen kann und somit nur bewirken kann, dass die Kontrolleinheit den Lautsprecher zur Wiedergabe einer bestimmten Audioinformation ansteuert. Ergänzend oder alternativ kann der Kennungsträger ein Bedienelement aufweisen, mit der innerhalb des Bereichs der Umgebung des Sensors nicht nur eine, sondern mehrere bestimmte Eigenschaften oder eine bestimmte Änderungen einer Eigenschaft dieser Umgebung erzeugen kann, die vom Sensor festgestellt werden und mit der die Kontrolleinheit die Art der Wiedergabe der Audioinformation ändern kann, beispielsweise die Lautstärke der Wiedergabe oder Steuerungsbefehle zur Auswahl des nächsten oder vorigen Kapitels oder Musikstücks. So kann durch Betätigen des Bedienelements des Kennungsträgers, beispielsweise durch das Drehen eines Arms oder eines Kopfs eines als Figur ausgebildeten Kennungsträgers, die Art der Wiedergabe der Audioinformation geändert werden, beispielsweise die Lautstärke der Wiedergabe.

In einer bevorzugten Ausführungsform weist der Kennungsträger keine Energiespeicher, insbesondere bevorzugt keine dauerhaften Energiespeicher wie beispielsweise eine Batterie auf, insbesondere bevorzugt keine Energiespeicher mit Ausnahme eines Kondensators.

Ein weiteres erfindungsgemäßes Verfahren zur Wiedergabe einer Audioinformation wird mit einer Vorrichtung mit
- einem Lautsprecher oder einem Lautsprecheranschluss,
- einem Sensor, der innerhalb eines Bereichs seiner Umgebung eine Eigenschaft oder eine Änderung einer Eigenschaft dieser Umgebung feststellen kann,
- einer Auflage, auf der ein Gegenstand dauerhaft platziert werden kann, wobei der Sensor zumindest in einem Bereich oberhalb der Auflage eine Eigenschaft oder eine Änderung einer Eigenschaft dieses Bereichs feststellen kann, und/oder einer Befestigung, an der ein Gegenstand dauerhaft befestigt werden kann, wobei der Sensor zumindest in einem Bereich benachbart der Befestigung eine Eigenschaft oder eine Änderung einer Eigenschaft dieses Bereichs feststellen kann,
- einer Kontrolleinheit durchgeführt,
bei dem die Kontrolleinheit den Lautsprecher oder den Lautsprecheranschluss zur Wiedergabe einer Audioinformation, deren Wiedergabe insbesondere bevorzugt mindestens 10s dauert, ansteuert, wenn der Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem Sensor festgestellten Eigenschaft feststellt.

Der erfindungsgemäße Kennungsträger ist dazu geeignet, mit einer erfindungsgemäßen Vorrichtung in einem erfindungsgemäßen System oder in einem erfindungsgemäßen Verfahren eingesetzt zu werden. Die erfindungsgemäßen Verfahren werden insbesondere bevorzugt, mit einem erfindungsgemäßen System durchgeführt.

Nachfolgend wird die Erfindung anhand einer lediglich Ausführungsformen der Erfindung darstellenden Zeichnung näher erläutert.

Darin zeigen:
- Fig. 1: eine perspektivische Ansicht der erfindungsgemäßen Vorrichtung zur Wiedergabe einer Audioinformation
- Fig. 2: eine Frontalansicht auf ein aus einer erfindungsgemäßen Vorrichtung gemäß Fig. 1 und einem Kennungsträger bestehenden erfindungsgemäßen System,
- Fig. 3: eine Frontalansicht auf einen erfindungsgemäßen Kennungsträger,
- Fig. 4: eine perspektivische Ansicht auf einen erfindungsgemäßen Kennungsträger in einer alternativen Ausführungsform und
- Fig. 5: eine Frontalansicht auf einen erfindungsgemäßen Kennungsträger in einer alternativen Ausführungsform.

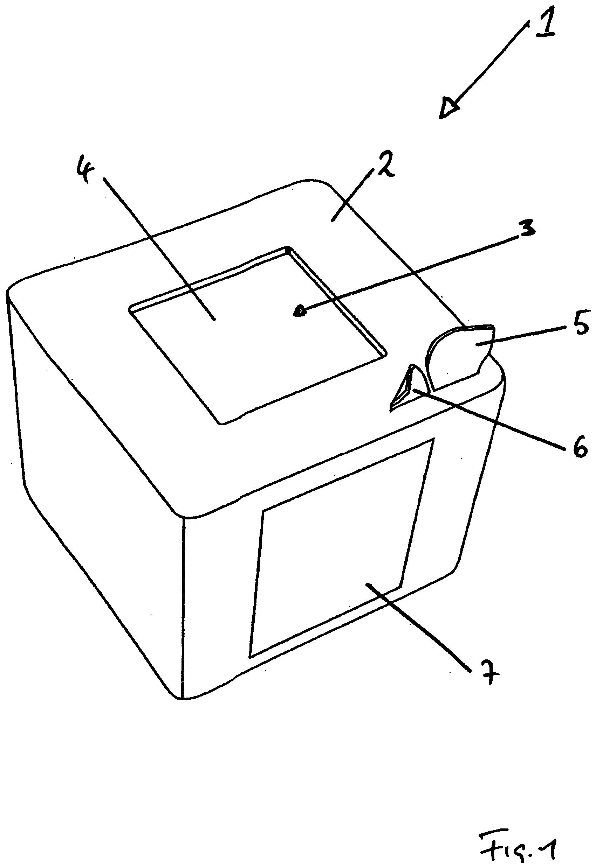

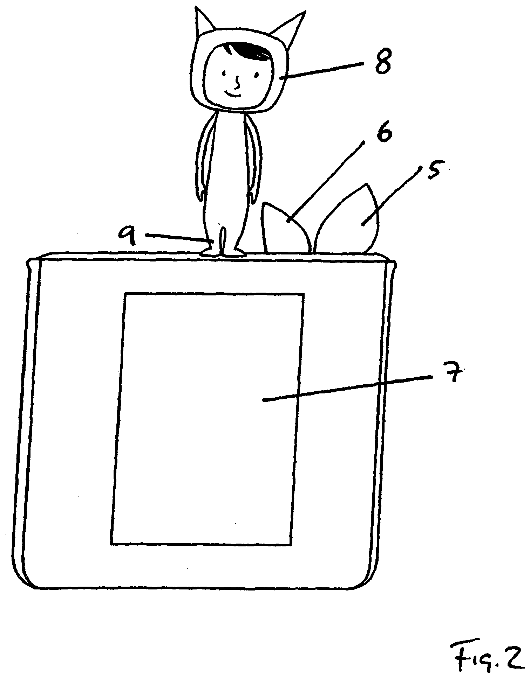

Die Fig. 1 zeigt die erfindungsgemäße Vorrichtung zur Wiedergabe einer Audioinformation. Die Vorrichtung 1 weist einen in der perspektivischen Ansicht der Fig. 1 nicht näher dargestellten Lautsprecher auf. Ferner weist die Vorrichtung 1 an ihrer Oberseite 2 eine Mulde 3 auf. Im Inneren der Vorrichtung 1, unterhalb der Mulde 3 ist ein (nicht näher dargestellter) Sensor angeordnet, der innerhalb des Bereichs der Mulde 3 eine Eigenschaft oder eine Änderung einer Eigenschaft dieser Umgebung feststellen kann, nämlich einen passiven RFID-Transponder (vgl. Fig. 2) auslesen kann. Ferner weist die Vorrichtung eine (nicht näher dargestellte) Kontrolleinheit auf, die den Lautsprecher zur Wiedergabe einer Audioinformation ansteuern kann, wenn der Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem Sensor festgestellten Eigenschaft feststellt.

Der Sensor ist derart innerhalb des Gehäuses der Vorrichtung 1 angeordnet, dass der Bereich der Umgebung des Sensors, in dem der Sensor eine Eigenschaft oder eine Änderung einer Eigenschaft dieser Umgebung feststellen kann, sich nicht weiter als 100 mm über die Grundfläche 4 der Mulde 3 nach oben hinaus erstreckt.

Die erfindungsgemäße Vorrichtung weist ein erstes, ohrenförmig ausgebildetes Bedienelement 5 und ein zweites, ebenfalls ohrenförmig ausgebildetes Bedienelement 6 auf. Das Bedienelement 5 ist größer ausgestaltet als das Bedienelement 6. Sowohl das Bedienelement 5 als auch das Bedienelement 6 können relativ zu dem übrigen Gehäuse der Vorrichtung 1 eine Kippbewegung vollziehen und in die in Fig. 1 dargestellte Grundstellung zurückschwenken.

Ferner weist die Vorrichtung 1 ein Display 7 auf.

Das in Fig. 2 dargestellte System weist neben der in Fig. 1 dargestellten Vorrichtung einen in Form einer Figur ausgebildeten Kennungsträger 8 auf. Der als Figur ausgebildete Kennungsträger 8 weist Beine 9 und Füße und keinen Sockel auf, mit dem die Füße 9 fest verbunden wären. In den Füßen des als Figur ausgebildeten Kennungsträgers 8 sind (nicht näher dargestellte) Magnete vorgesehen. Diese können mit unmittelbar unter der Bodenfläche 4 der Mulde 3 angeordneten Magneten oder Metallobjekten zusammenwirken, so dass der Kennungsträger 8 auf der Bodenplatte 4 der Mulde 3 lösbar festgehalten werden kann.

Die Bedienung des erfindungsgemäßen Systems erfolgt wie folgt:
Die Fig. 1 zeigt die erfindungsgemäße Vorrichtung in einem Grundzustand, in der sie in der hier dargestellten Ausführungsform keine Audioinformation wiedergibt. Der Sensor überwacht dauerhaft oder periodisch den Bereich der Mulde 3 daraufhin, ob dieser Bereich eine bestimmte Eigenschaft oder eine bestimmte Änderung einer Eigenschaft aufweist. In der hier dargestellten Ausführungsform bewacht der Sensor den Bereich der Mulde 3 daraufhin, ob ein bestimmter RFID-Transponder in den Bereich der Mulde verbracht wird. In der in die Fig. 1 dargestellten Betriebssituation ist dies nicht der Fall, so dass die Vorrichtung 1 keine Audioinformation wiedergibt.

Die Fig. 2 zeigt die Betriebssituation, in der das erfindungsgemäße System durch Hinzufügen des Kennungsträgers 8 vervollständigt worden ist. Der Kennungsträger 8 wird auf die Bodenplatte 4 der Mulde 3 gestellt und haftet dort mittels der in den Füßen des Kennungsträgers 8 vorgesehenen Magneten an. Der Kennungsträger 8 weist einen (nicht näher dargestellten) RFID-Transponder auf. Dadurch dass der Kennungsträger 8 nunmehr in den von dem Sensor überwachten Bereich der Umgebung des Sensors verbracht worden ist, weist dieser nunmehr eine bestimmte, von dem Sensor feststellbare Eigenschaft auf. Der Sensor erkennt das Vorhandensein des RFID-Transponders in dem Kennungsträger 8 und teilt dies der (nicht näher dargestellten) Kontrolleinheit mittels eines Signals mit. Daraufhin steuert die Kontrolleinheit den Lautsprecher zur Wiedergabe einer Audioinformation an, ohne dass es der Betätigung eines weiteren Bedienelements bedürfte.

Der Sensor liest aus dem RFID-Transponder des Kennungsträgers 8 eine Kennung aus und teilt der Kontrolleinheit diese Kennung mit. Aufgrund einer in der Kontrolleinheit abgelegten Zuordnungstabelle ordnet die Kontrolleinheit die von dem Sensor ausgelesene Kennung einen bestimmten, eine bestimmte Audioinformation enthaltenden Datensatz in einem (nicht näher dargestellten) Speicher der Vorrichtung 1 zu. Daraufhin steuert die Kontrolleinheit den Lautsprecher an, um die in den bestimmten, von der Kontrolleinheit aus dem Speicher ausgelesenen Daten wiedergelegte Audioinformation wiederzugeben. Bei dieser Audioinformation handelt es sich um ein Musikstück, dessen Wiedergabe mindestens 10s dauert.

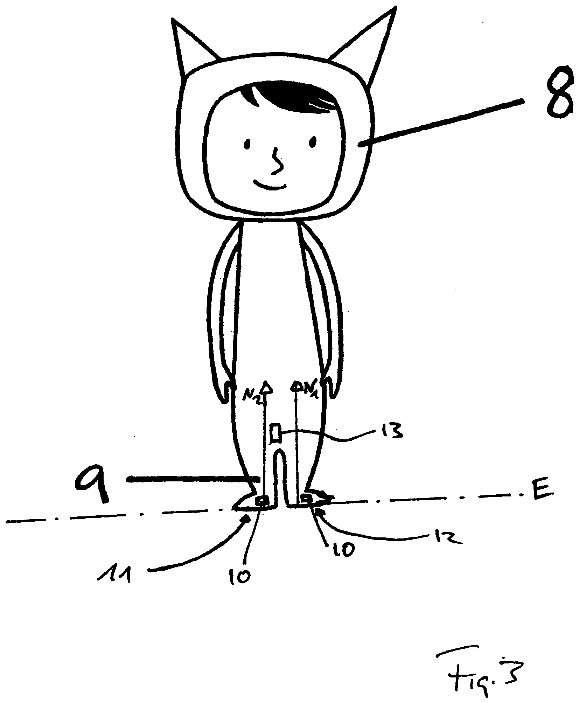

Die Fig. 3 zeigt den erfindungsgemäßen Kennungsträger 8 in einer Frontalansicht. Der als Figur ausgebildete Kennungsträger 8 weist Beine 9 und Füße und keine Sockel auf, mit dem die Füße fest verbunden wären. In den Füßen des als Figur ausgebildeten Kennungsträgers 8 sind Magnete 10 vorgesehen. Die Füße bilden nicht ineinander übergehende Teilflächen 11 und 12 einer Standfläche des Kennungsträgers 8 aus. Der Kennungsträger weist ferner eine als RFID-Transponder ausgebildete Kennung 13 auf. Die Magneten 10 sind näher zu der Standfläche (den Teilflächen 11 und 12) angeordnet als die Kennung 13. Wie durch den Pfeil mit dem Symbol N1 in der Figur 3 dargestellt, gibt es zumindest eine Flächennormale N1 zur Standfläche, die weder durch einen Magneten 10 noch durch die Kennung 13 geht. Genauso gibt es zumindest eine Flächennormale N2 zur Standfläche, die nur durch den Magneten 10 und nicht durch die Kennung 13 führt.

Die Standfläche liegt in einer Ebene E.

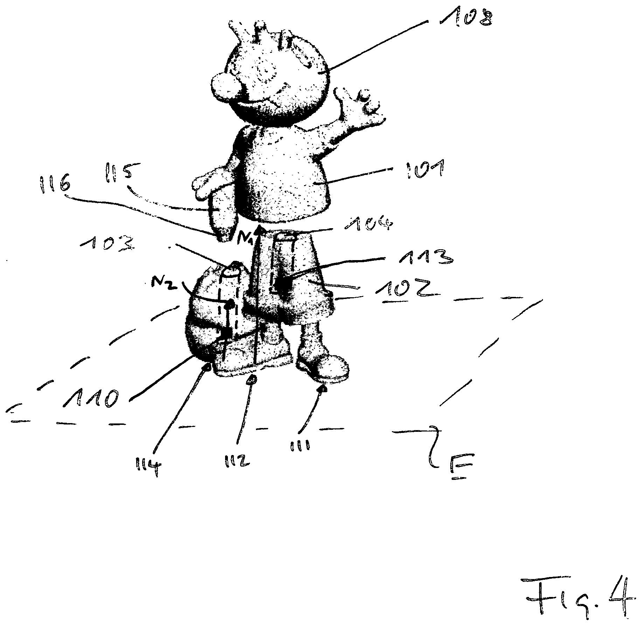

Die Fig. 4 zeigt eine alternative Ausführungsform eines erfindungsgemäßen Kennungsträgers 108 in einer perspektivischen Ansicht. Der als Figur ausgebildete Kennungsträger weist einen Körper mit einem ersten Teil 101 und einem zweiten Teil 102 auf. Der zweite Teil 102 weist eine erste Ausnehmung 103 in Form eines zylinderförmigen Sacklochs auf, in dessen Grund sich ein Magnet 110 befindet. Der zweite Teil 102 weist eine zweite Ausnehmung 104 in Form eines zylinderförmigen Sacklochs auf, in dessen Grund sich eine als RFID-Transponder oder NFC-Tag ausgebildete Kennung 113 befindet. Der Kennungsträger 108 ist als Figur ausgeführt, die Beine 109 und Füße und keine Sockel aufweist, mit dem die Füße fest verbunden wären. Ferner weist die Figur einen Sack auf, der neben den Füßen der Figur steht. Die Füße und der Boden des Sacks bilden nicht ineinander übergehende Teilflächen 111, 112, 114 einer Standfläche des Kennungsträgers 108 aus. Der Magnet 110 ist näher zu der Standfläche angeordnet als die Kennung 113. Wie durch den Pfeil mit dem Symbol N1 in der Figur 4 dargestellt, gibt es zumindest eine Flächennormale N1 zur Standfläche, die weder durch einen Magneten 110 noch durch die Kennung 113 geht. Genauso gibt es zumindest eine Flächennormale N2 zur Standfläche, die nur durch den Magneten 10 und nicht durch die Kennung 13 führt.

Der erste Teil 101 des Körpers ist eine Freiform und weist gesamthaft eine dreidimensionale Form auf, die keinem geometrischen Grundkörper entspricht, auch wenn seine gesamthafte dreidimensionale Form aus geometrischen Grundkörpern zusammengesetzt sein kann oder geometrische Grundkörper enthalten kann, wie beispielsweise den zylinderförmigen Vorsprung 115 und dessen kegelstumpfförmiges Ende 116. Auch der zweite Teil 102 des Körpers ist eine Freiform und weist gesamthaft eine dreidimensionale Form auf, die keinem geometrischen Grundkörper entspricht, auch wenn seine gesamthafte dreidimensionale Form aus geometrischen Grundkörpern zusammengesetzt sein kann oder geometrische Grundkörper enthalten kann, wie beispielsweise die zylinderförmigen Beine der Figur. Der Vorsprung 115 ist dafür vorgesehen, um in die Ausnehmung 103 einzugreifen und den in deren Grund angeordneten Magneten 110 zu sichern.

Die Standfläche liegt in einer Ebene E.

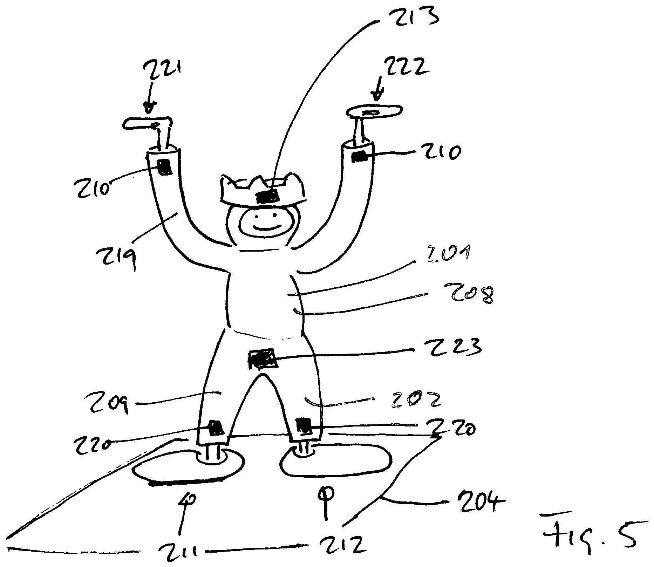

Die Fig. 5 zeigt eine weitere alternative Ausführungsform eines erfindungsgemäßen Kennungsträgers 208 in einer perspektivischen Ansicht. Der als Figur ausgebildete Kennungsträger weist einen Körper mit einem ersten Teil 201 und einem zweiten, im Herstellungsprozess vom ersten Teil 201 getrennten und mittels eines Fügeverfahrens mit dem ersten Teil 201 verbundenen Teil 202 auf. Der erste Teil weist zwei Magneten 210 und eine Kennung 213 auf. Der zweite Teil 202 zwei Magneten 220 und eine Kennung 223 auf. Der Kennungsträger 208 ist als Figur ausgeführt, die Beine 209 und Füße und keine Sockel aufweist, mit dem die Füße fest verbunden wären. Ferner weist die Figur Arme 219 mit Händen auf. Die Füße bilden nicht ineinander übergehende Teilflächen 211, 212 einer ersten Standfläche des Kennungsträgers 208 aus. Die Hände bilden nicht ineinander übergehende Teilflächen 221, 222 einer zweiten Standfläche des Kennungsträgers 208 aus.

In der Fig. 5 dargestellten Betriebssituation steht der Kennungsträger 208 mit der durch die Füße gebildeten Standfläche auf einer Stellfläche 204, die beispielsweise die Bodenfläche 4 der in Fig. 1 dargestellten Vorrichtung 1 sein kann. In dieser Betriebssituation ist die Kennung 223 näher zur Stellfläche 204, als die Kennung 213. Ein unterhalb der Stellfläche angeordneter, nicht näher dargestellter Sensor kann innerhalb eines Bereichs seiner Umgebung eine erste Eigenschaft oder eine erste Änderung einer Eigenschaft eines in dem Bereich seiner Umgebung wirkenden Magnetfelds feststellen, wenn der Kennungsträger 208 in dieser Ausrichtung auf die Stellfläche 204 gestellt wird. Wird der Kennungsträger 208 mit der durch die Hände gebildeten, anderen Standfläche auf die Stellfläche 204 gestellt, so kann der nicht näher dargestellter Sensor innerhalb eines Bereichs seiner Umgebung eine zweite Eigenschaft oder eine zweite Änderung einer Eigenschaft eines in dem Bereich seiner Umgebung wirkenden Magnetfelds feststellen. Dies kann für ein Bedienkonzept genutzt werden, beispielsweise um beim Erkennen der ersten Eigenschaft, bzw. der ersten Änderung eine Frage über den Lautsprecher auszugeben und um beim Erkennen der zweiten Eigenschaft oder zweiten Änderung eine Antwort über den Lautsprecher auszugeben.

Die Standflächen liegen jeweils in Ebenen.

## Patentansprüche

1. System aus einem Kennungsträger und einem Spielzeug zur Wiedergabe von Musik oder einer gesprochenen Geschichte mit einem Lautsprecher oder einem Lautsprecheranschluss, einem Sensor, der innerhalb eines Bereichs seiner Umgebung eine Eigenschaft oder eine Änderung einer Eigenschaft eines in dem Bereich seiner Umgebung wirkenden Magnetfelds feststellen kann, und einer Kontrolleinheit, die den Lautsprecher oder den Lautsprecheranschluss zur Wiedergabe von Musik oder einer gesprochenen Geschichte ansteuern kann, wenn der Sensor innerhalb des Bereichs seiner Umgebung eine bestimmte Eigenschaft oder eine bestimmte Änderung einer Eigenschaft des in dem Bereich seiner Umgebung wirkenden Magnetfelds feststellt oder wenn die Kontrolleinheit eine bestimmte Änderung der von dem Sensor festgestellten Eigenschaft feststellt,
wobei der Kennungsträger (8, 108, 208) mit
- einer Standfläche,
- einem Magneten (10, 110, 210, 220) und
- einer Kennung (13, 113, 213, 223) ausgeführt ist, wobei die Kennung (13, 113, 213, 223) eine Eigenschaft eines externen Magnetfelds ändert, wenn sie in das Magnetfeld gelangt, wobei die Kennung (13, 113, 213, 223) ein aktiver RFID-Transponder oder ein passiver RFID-Transponder ist und eine Antenne aufweist,
wobei der Kennungsträger (8, 108, 208) eine figürliche Form seines Äußeren hat, nämlich eine Tierfigur, ein Mensch oder eine Fantasiefigur ist,
**dadurch gekennzeichnet, dass** keine Flächennormale (N1, N2) zur Standfläche durch den Magneten und durch die Antenne der Kennung führt, so dass es nur Flächennormalen zur Standfläche gibt, die entweder
• gar nicht durch den Magneten und gar nicht durch die Antenne der Kennung führen oder
• nur solche, die nur durch einen Teil des Magneten führen, aber nicht durch die Antenne der Kennung führen, oder
• solche, die nur durch einen Teil der Antenne der Kennung führen, aber nicht durch einen Teil des Magneten führen.

2. Verfahren zur Wiedergabe von Musik oder einer gesprochenen Geschichte mit einem System nach einem der Ansprüche 1, **dadurch gekennzeichnet, dass** der Kennungsträger in den Bereich der Umgebung des Sensors gebracht wird, in dem der Sensor eine Eigenschaft oder eine Änderung einer Eigenschaft eines in dem Bereich seiner Umgebung wirkenden Magnetfelds feststellt und die Kontrolleinheit den Lautsprecher oder den Lautsprecheranschluss zur Wiedergabe von Musik oder einer gesprochenen Geschichte ansteuert.

3. Verwendung eines Kennungsträgers (8, 108, 208) mit
- einer Standfläche,
- einem Magneten (10, 110, 210, 220) und
- einer Kennung (13, 113, 213, 223) ausgeführt ist, wobei die Kennung (13, 113, 213, 223) eine Eigenschaft eines externen Magnetfelds ändert, wenn sie in das Magnetfeld gelangt, wobei die Kennung (13, 113, 213, 223) ein aktiver RFID-Transponder oder ein passiver RFID-Transponder ist und eine Antenne aufweist,
wobei der Kennungsträger (8, 108, 208) eine figürliche Form seines Äußeren hat, nämlich eine Tierfigur, ein Mensch oder eine Fantasiefigur ist,
wobei keine Flächennormale (N1, N2) zur Standfläche durch den Magneten und durch die Antenne der Kennung führt, so dass es nur Flächennormalen zur Standfläche gibt, die entweder
• gar nicht durch den Magneten und gar nicht durch die Antenne der Kennung führen oder
• nur solche, die nur durch einen Teil des Magneten führen, aber nicht durch die Antenne der Kennung führen, oder
• solche, die nur durch einen Teil der Antenne der Kennung führen, aber nicht durch einen Teil des Magneten führen
in einem System nach Anspruch 1 oder bei einem Verfahren nach Anspruch 2.

4. Verwendung nach Anspruch 3, **dadurch gekennzeichnet, dass** die Standfläche in einer Ebene (E) liegt.

5. Verwendung nach einem der Ansprüche 3 oder 4, **dadurch gekennzeichnet, dass** die Standfläche aus mehreren, nicht in einander übergehenden Teilflächen (11, 12, 111, 112, 114, 221, 222, 211, 212) besteht.

6. Verwendung nach einem der Ansprüche 3 bis 5, **dadurch gekennzeichnet, dass** der Magnet (10, 110 210, 220) ein Scheibenmagnet oder ein Stabmagnet ist.

7. Verwendung nach einem der Ansprüche 3 bis 6, **dadurch gekennzeichnet dass** der Kennungsträger (113) einen Körper aufweist, wobei der Magnet (110) in dem Körper angeordneten ist und die Kennung (103) in dem Körper angeordneten ist, wobei der Körper aus mindestens einem ersten Teil (101) und einem zweiten Teil (102) besteht.

8. Verwendung nach Anspruch 7, **dadurch gekennzeichnet dass** der Magnet (110) in dem ersten Teil (101) des Körpers angeordnet ist und die Kennung (103) in dem zweiten Teil (102) des Körpers angeordnet ist.

9. Verwendung nach einem der Ansprüche 3 bis 8, **dadurch gekennzeichnet dass** der Kennungsträger (113) einen Körper aufweist, wobei der Magnet (110) in dem Körper angeordnet ist und die Kennung (103) in dem Körper angeordnet ist, wobei der Körper zumindest ein Material aufweist, das zumindest zu 50% biologisch abbaubar ist.

10. Verwendung nach Anspruch 3 bis 9, **dadurch gekennzeichnet dass** der Kennungsträger (113) einen Körper aufweist, wobei der Magnet (110) in dem Körper angeordnet ist und die Kennung (103) in dem Körper angeordnet ist, wobei der Körper zumindest ein Material aufweist, das aus einem nachwachsenden Rohstoff hergestellt wurde.

11. Verwendung nach Anspruch 3 bis 10, **dadurch gekennzeichnet, dass** der Magnet (10, 110, 210, 220) näher zur Standfläche angeordnet ist als die Kennung (13, 113, 213, 223).

## Claims

1. System comprising an identification carrier and a toy for reproducing music or an audio story with a loudspeaker or a loudspeaker connection, a sensor, which can detect a characteristic or a change in a characteristic of a magnetic field acting in the area of its surroundings, and a control unit which can control the loudspeaker or the loudspeaker connection to reproduce music or an audio story when the sensor detects within the area of its surroundings a determined characteristic or a determined change of a characteristic of the magnetic field acting in the area of its surroundings or when the control unit detects a determined change in the characteristic detected by the sensor,
wherein the identification carrier (8, 108, 208) is designed with
- a platform,
- a magnet (10, 110, 210, 220) and
- an identification (13, 113, 213, 223) wherein the identification (13, 113, 213, 223) changes a characteristic of an external magnetic field when it enters the magnetic field wherein the identification (13, 113, 213, 223) is an active RFID transponder or a passive RFID transponder or has an antenna,
wherein the identification carrier (8, 108, 208) has the external figurative shape of either an animal, a human being or a fantasy figure,
**characterised in that** no surface normal (N1, N2) to the platform leads to the identification by the magnet and by the antenna so that only the surface normal to the platform remains, which either
• does not lead to the identification by the magnet at all and by the antenna at all or
• leads to the identification of only a part of the magnet but not by the antenna, or
• leads to the identification of only a part of the antenna but not by a part of the magnet.

2. Method for the reproduction of music or an audio story with a system according to any one of claim 1, **characterised in that** the identification carrier is placed in the area of the surroundings of the sensor, wherein the sensor detects a characteristic or a change in a characteristic of a magnetic field acting in the area of its surroundings and the control unit operates the loudspeaker or the loudspeaker connection to reproduce music or an audio story.

3. Use of an identification carrier (8, 108, 208) is designed with
- a platform,
- a magnet (10, 110, 210, 220) and
- an identification (13, 113, 213, 223) wherein the identification (13, 113, 213, 223) changes a characteristic of an external magnetic field when it enters the magnetic field, wherein the identification (13, 113, 213, 223) is an active RFID transponder or a passive RFID transponder and has an antenna,
wherein the identification carrier (8, 108, 208) has the external figurative shape of either an animal, a human being or a fantasy figure,
wherein no surface normal (N1, N2) to the platform leads to the identification by the magnet and by the antenna so that only the surface normal to the platform remains, which either
• does not lead to the identification by the magnet at all and by the antenna at all or
• leads to the identification of only a part of the magnet but not by the antenna, or
• leads to the identification of only a part of the antenna but not by a part of the magnet in a system according to claim 1 or according to a method from claim 2.

4. Application according to claim 3, **characterised in that** the platform is located in one plane (E).

5. Application according to either of claims 3 or 4, **characterised in that** the platform consists of several partial surfaces which do not merge (11, 12, 111, 112, 114, 221, 222, 211, 212).

6. Application according to any one of claims 3 to 5, **characterised in that** the magnet (10, 110 210, 220) is a disc magnet or a bar magnet.

7. Application according to any one of claims 3 to 6, **characterised in that** the identification carrier (113) has a body wherein the magnet (110) is arranged in the body and the identification (103) is arranged in the body wherein the body consists of at least a first part (101) and a second part (102).

8. Application according to claim 7, **characterised in that** the magnet (110) is arranged in the first part (101) of the body and the identification (103) is arranged in the second part (102) of the body.

9. Application according to any one of claims 3 to 8, **characterised in that** the identification carrier (113) has a body wherein the magnet (110) is arranged in the body and the identification (103) is arranged in the body,
wherein the body has at least one material of which up to 50% at least is biologically degradable.

10. Application according to any one of claims 3 to 9, **characterised in that** the identification carrier (113) has a body wherein the magnet (110) is arranged in the body and the identification (103) is arranged in the body,
wherein the body has at least one material which has been produced from a renewable material.

11. Application according to any one of claims 3 to 10, **characterised in that** the magnet (10, 110, 210, 220) is arranged closer to the platform than the identification (13, 113, 213, 223).

## Revendications

1. Système consistant en un support d'identification et un jeu pour écouter de la musique ou une histoire parlée avec un haut-parleur ou un connecteur pour haut-parleur, un capteur, qui peut déterminer à l'intérieur d'une zone de son environnement une caractéristique ou une modification d'une caractéristique d'un champ magnétique agissant dans la zone de son environnement, et une unité de contrôle, qui peut commander le haut-parleur ou le connecteur pour haut-parleur pour écouter de la musique ou une histoire parlée, lorsque le capteur détermine à l'intérieur de la zone de son environnement une certaine caractéristique ou une certaine modification d'une caractéristique du champ magnétique agissant dans la zone de son environnement ou lorsque l'unité de contrôle détermine une certaine modification de la caractéristique déterminée par le capteur,
le support d'identification (8, 108, 208) étant réalisé avec
- une surface de support,
- un aimant (10, 110, 210, 220) et
- un identifiant (13, 113, 213, 223), l'identifiant (13, 113, 213, 223) modifiant une caractéristique d'un champ magnétique externe lorsqu'il rentre dans le champ magnétique, l'identifiant (13, 113, 213, 223) étant un transpondeur RFID actif ou un transpondeur RFID passif et présentant une antenne,
le support d'identification (8, 108, 208) ayant une forme figurative de son extérieur, à savoir un animal, une personne ou une figure fantastique,
**caractérisé en ce qu'**aucune normale à la surface (N1, N2) par rapport à la surface de support ne traverse l'aimant et l'antenne de l'identifiant de telle sorte qu'il n'y a que des normales à la surface par rapport à la surface de support qui soit
• ne traversent pas l'aimant et non pas l'antenne de l'identifiant, soit
• uniquement celles qui traversent une partie de l'aimant, mais pas l'antenne de l'identifiant, soit
• celles qui traversent uniquement une partie de l'antenne de l'identifiant, mais pas une partie de l'aimant.

2. Procédé pour écouter de la musique ou une histoire parlée avec un système selon la revendication 1, **caractérisé en ce que** le support d'identification est amené dans la zone de l'environnement du capteur, dans laquelle le capteur détermine une caractéristique ou une modification d'une caractéristique d'un champ magnétique agissant dans la zone de son environnement et l'unité de contrôle commande le haut-parleur ou le connecteur pour haut-parleur pour écouter de la musique ou une histoire parlée.

3. Utilisation d'un support d'identification (8, 108, 208) avec
- une surface de support,
- un aimant (10, 110, 210, 220) et
- un identifiant (13, 113, 213, 223), l'identifiant (13, 113, 213, 223) modifiant une caractéristique d'un champ magnétique externe lorsqu'il rentre dans le champ magnétique, l'identifiant (13, 113, 213, 223) étant un transpondeur RFID actif ou un transpondeur RFID passif et présentant une antenne,
le support d'identification (8, 108, 208) ayant une forme figurative de son extérieur, à savoir un animal, une personne ou une figure fantastique,
aucune normale à la surface (N1, N2) par rapport à la surface de support ne traverse l'aimant et l'antenne de l'identifiant de telle sorte qu'il n'y a que des normales à la surface par rapport à la surface de support qui soit
• ne traversent pas l'aimant et non pas l'antenne de l'identifiant, soit
• uniquement celles qui traversent une partie de l'aimant, mais pas l'antenne de l'identifiant, soit
• celles qui traversent uniquement une partie de l'antenne de l'identifiant, mais pas une partie de l'aimant
dans un système selon la revendication 1 ou dans un procédé selon la revendication 2.

4. Utilisation selon la revendication 3, **caractérisée en ce que** la surface de support se situe dans un plan (E).

5. Utilisation selon l'une des revendications 3 ou 4, **caractérisée en ce que** la surface de support est constituée de plusieurs surfaces partielles (11, 12, 111, 112, 114, 221, 222, 211, 212) qui ne se confondent pas.

6. Utilisation selon l'une des revendications 3 à 5, **caractérisée en ce que** l'aimant (10, 110, 210, 220) est un aimant disque ou un aimant droit.

7. Utilisation selon l'une des revendications 3 à 6, **caractérisée en ce que** le support d'identification (113) présente un corps, l'aimant (110) étant disposé dans le corps et l'identifiant (103) étant disposé dans le corps, le corps étant constitué d'au moins d'un premier élément (101) et d'un deuxième élément (102).

8. Utilisation selon la revendication 7, **caractérisée en ce que** l'aimant (110) est disposé dans le premier élément (101) du corps et l'identifiant (103) est disposé dans le deuxième élément (102) du corps.

9. Utilisation selon l'une des revendications 3 à 8, **caractérisée en ce que** le support d'identification (113) présente un corps, l'aimant (110) étant disposé dans le corps et l'identifiant (103) étant disposé dans le corps,
le corps présentant au moins un matériau qui est au moins à 50 % biodégradable.

10. Utilisation selon les revendications 3 à 9, **caractérisée en ce que** le support d'identification (113) présente un corps, l'aimant (110) étant disposé dans le corps et l'identifiant (103) étant disposé dans le corps,
le corps présentant au moins un matériau qui a été fabriqué à partir d'une matière première renouvelable.

11. Utilisation selon les revendications 3 à 10, **caractérisée en ce que** l'aimant (10, 110, 210, 220) est disposé plus près de la surface de support que l'identifiant (13, 113, 213, 223).
